# EUROPEAN PATENT APPLICATION

(11) **EP 4 588 774 A1**
(43) Date of publication of application: **23.07.2025**
(21) Application number: 22958712.6
(22) Date of filing: 13.09.2022
(51) Int. Cl.: B63B 79/15, B63J 2/08

(54) **SYSTEM FOR ESTIMATING QUALITY OF CARGO IN HOLD OF SHIP**

(71) Applicant: Nippon Yusen Kabushiki Kaisha, Tokyo 100-0005 (JP)
(72) Inventor: MAEDA Yoshihiko, Tokyo 100-0005 (JP); NAKAMURA Yoshio, Tokyo 100-0005 (JP); KITAYAMA Yuta, Tokyo 100-0005 (JP); HAMADA Tokuichiro, Tokyo 100-0005 (JP); MASUYAMA Katsumi, Tokyo 100-0005 (JP)
(74) Representative: Bandpay & Greuter
(86) International application number: PCT/JP2022/034140
(87) International publication number: WO 2024/057377

(57) **Abstract**

The present invention provides means for estimating a future quality of a cargo in a hold of a ship. An acquisition means of a management device acquires forecast values of temperature and humidity of outside air from a weather information distribution server device. The values of the outside air are based on conditions expected to be encountered by a ship navigating along a predetermined navigation route in accordance with a predetermined navigation schedule. A first estimation means estimates a temperature and humidity inside the hold of the ship during a navigation period based on the forecast values of the temperature and humidity of the outside air acquired by the acquisition means. A second estimation means estimates a future quality of the cargo in the ship hold based on the temperature and humidity inside the hold of the ship estimated by the first estimation means.

## Description

### TECHNICAL FIELD

The present invention relates to a technique for estimating a quality of a cargo in a ship cargo hold.

### BACKGROUND ART

A quality of a cargo in a cargo hold of a ship may change during transport of the cargo. For example, occurrence of condensation in the hold can cause deterioration in a quality of a rust-prone product such as steel coils due to condensed water droplets adhering to a surface of the product and causing rust.

Patent Document 1, for example, discloses a device for preventing occurrence of condensation in a hold of a ship. The device disclosed in Patent Document 1 measures a temperature and humidity in the hold, and based on the measured temperature and humidity, controls start and stop operations of a dehumidifier and a heater to maintain the temperature and humidity within predetermined ranges and prevent occurrence of condensation in the hold.

### PRIOR ART DOCUMENT

### PATENT DOCUMENT

Patent Document 1: JP2003-307336A

### SUMMARY OF THE INVENTION

### PROBLEM TO BE SOLVED BY THE INVENTION

According to the device disclosed in Patent Document 1, the quality of the cargo is maintained by keeping the environment in the hold within predetermined ranges. However, the operation of the device disclosed in Patent Document 1 involves dehumidification and heating, which incur costs.

Ventilation of the hold can be used to change humidity and temperature inside the hold without performing dehumidifying or heating. For example, when an absolute humidity of air outside the hold is lower than that of air inside the hold, the absolute humidity of the air inside the hold can be reduced by opening ventilation windows of the hold, sufficiently ventilating the hold, and then closing the ventilation windows. As a result, a likelihood of condensation occurring inside the hold is reduced. In general, costs associated with opening and closing the ventilation windows are lower than those associated with dehumidification or heating.

If a future humidity and temperature outside the hold can be estimated along with a future humidity and temperature inside the hold, it is possible to predict when condensation will occur in the hold, and a crew can understand the risk and plan ventilation to prevent occurrence of condensation in the hold.

If the cargo is a rust-prone product such as steel coils, rust may form on the product due to the occurrence of condensation, resulting in a deterioration of a quality of the product. If the cargo is wood, for example, a low relative humidity inside the hold will dry the wood and a quality of the wood will generally improve. This is because wood that is dry is generally more valuable than wood that contains a large amount of moisture. Therefore, how environmental parameters (physical attributes in the vicinity of the cargo) affect the quality of the cargo varies depending on the type of cargo.

Thus, if it is known in advance how a quality of the cargo in the hold will be affected by variations in environmental parameters in the hold during navigation of the ship, appropriate actions can be taken to prevent deterioration in the quality of the cargo or to improve a quality of the cargo.

In view of the above background, the present invention provides means for estimating the future quality of the cargo stored in the hold of the ship.

### MEANS FOR SOLVING THE PROBLEM

To solve the above-described problem, the present invention provides a system comprising: an acquisition means that acquires forecast values of external environmental parameters, which are forecasts of future environmental parameters outside a hold of a ship; a first estimation means that generates estimated values of internal environmental parameters, which are estimates of future environmental parameters inside the hold of the ship, based on the forecast values of the external environmental parameters; and a second estimation means that generates estimated values of a cargo quality, which are estimates of a future quality of a cargo stored in the hold of the ship, based on the estimated values of the internal environmental parameters.

The present invention also provides a program for causing a computer to execute: a process of acquiring forecast values of external environmental parameters, which are forecasts of future environmental parameters outside a hold of a ship; a process of generating estimated values of internal environmental parameters, which are estimates of future environmental parameters inside the hold of the ship, based on the forecast values of the external environmental parameters; and a process of generating estimated values of a cargo quality, which are estimates of a future quality of a cargo stored in the hold of the ship, based on the estimated values of the internal environmental parameters.

### ADVANTAGES OF THE INVENTION

According to the present invention, the future quality of cargo stored in the hold is estimated. As a result, for example, the crew can take actions to prevent deterioration in the quality of the cargo or to improve the quality of the cargo.

### BRIEF EXPLANATION OF THE DRAWINGS

[FIG. 1] Figure 1 shows the overall configuration of a system according to an exemplary embodiment of the present invention.
[FIG. 2] Figure 2 shows the configuration of a computer used as hardware of the management device according to the exemplary embodiment of the present invention.
[FIG. 3] Figure 3 shows the functional configuration of the management device according to the exemplary embodiment of the present invention.
[FIG. 4] Figure 4 illustrates candidate navigation route data according to the exemplary embodiment of the present invention.
[FIG. 5] Figure 5 shows the configuration of navigation schedule data according to the exemplary embodiment of the present invention.
[FIG. 6] Figure 6 shows the data configuration of a weather forecast table according to the exemplary embodiment of the present invention.
[FIG. 7] Figure 7 shows the configuration of hold monitoring-schedule data according to the exemplary embodiment of the present invention.
[FIG. 8A] Figure 8A shows the data configuration of a hold temperature estimation table according to the exemplary embodiment of the present invention.
[FIG. 8B] Figure 8B shows the data configuration of a saturation water vapor amount estimation table according to the exemplary embodiment of the present invention.
[FIG. 9] Figure 9 shows the data configuration of a hold humidity estimation table according to the exemplary embodiment of the present invention.
[FIG. 10] Figure 10 shows the data configuration of a cargo quality estimation table according to the exemplary embodiment of the present invention.
[FIG. 11] Figure 11 shows graphs explaining a method for determining a ventilation period by the management device according to the exemplary embodiment of the present invention.
[FIG. 12] Figure 12 shows the configuration of ventilation schedule data according to the exemplary embodiment of the present invention.
[FIG. 13] Figure 13 shows graphs explaining a method for determining a dehumidification period by the management device according to the exemplary embodiment of the present invention.
[FIG. 14] Figure 14 shows the configuration of dehumidification schedule data according to the exemplary embodiment of the present invention.
[FIG. 15] Figure 15 shows a flow of processing performed by the management device according to the exemplary embodiment of the present invention.
[FIG. 16] Figure 16 shows a flow of processing performed by the management device according to the exemplary embodiment of the present invention.
[FIG. 17] Figure 17 shows a flow of processing performed by the management device according to the exemplary embodiment of the present invention.
[FIG. 18] Figure 18 shows a flow of processing performed by the management device according to the exemplary embodiment of the present invention.
[FIG. 19] Figure 19 shows a flow of processing performed by the management device according to the exemplary embodiment of the present invention.

### MODES FOR CARRYING OUT THE INVENTION

### [EXEMPLARY EMBODIMENT]

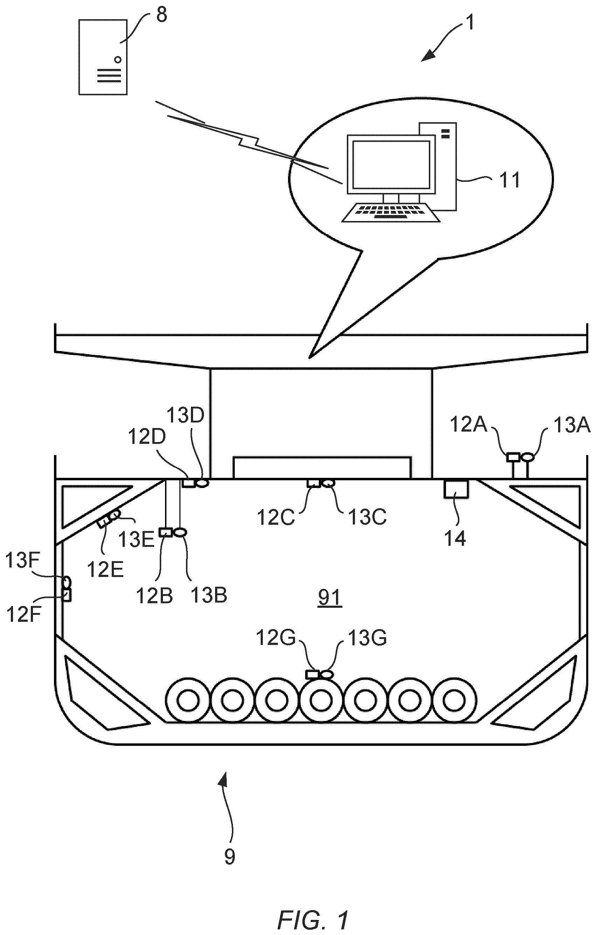

Figure 1 is a diagram showing the overall configuration of a system 1 according to an exemplary embodiment of the present invention. System 1 is a system that proposes a navigation route and a navigation schedule for the ship, a ventilation schedule for the hold of the ship, and an operation schedule for a device that forcibly changes the values of environmental parameters inside the hold, each of which are desirable from a viewpoint of preventing deterioration in or improving the quality of the cargo transported by the ship.

The type of cargo transported by the ship to which system 1 is applied is not limited. However, in the following description, by way of example, the type of cargo transported by the ship (hereinafter referred to as "cargo L") is assumed to be steel coils. It is noted that deterioration in quality of steel coils is mainly due to rust caused by water adhesion resulting from occurrence of condensation inside the hold. Therefore, system 1 described below proposes a navigation route and other parameters that minimize to as great an extent as possible an estimated condensation occurrence time inside the hold.

System 1 includes a management device 11 installed on the bridge of ship 9, a plurality of thermometers 12 installed both outside and inside hold 91, a plurality of hygrometers 13 installed both outside and inside hold 91, and a dehumidifier 14 that dehumidifies the air inside hold 91.

In the present application, the exterior of the hold is the outer surface of the structures that constitute the hold and the space outside the hold. In the present application, the interior of the hold is to the inner surface of the structures that constitute the hold and the space inside the hold.

In the following description, for sake of simplicity, it is assumed that ship 9 is equipped with only one hold 91. However, in general, ship 9 is equipped with more than one hold 91. In such a case, system 1 is provided with thermometers 12 (thermometers 12B to 12G), hygrometers 13 (hygrometers 13B to 13G), and dehumidifiers 14 for each hold 91.

Management device 11 is a core device of system 1 and is a computer that proposes the navigation route and other parameters described below by executing a program according to the present embodiment.

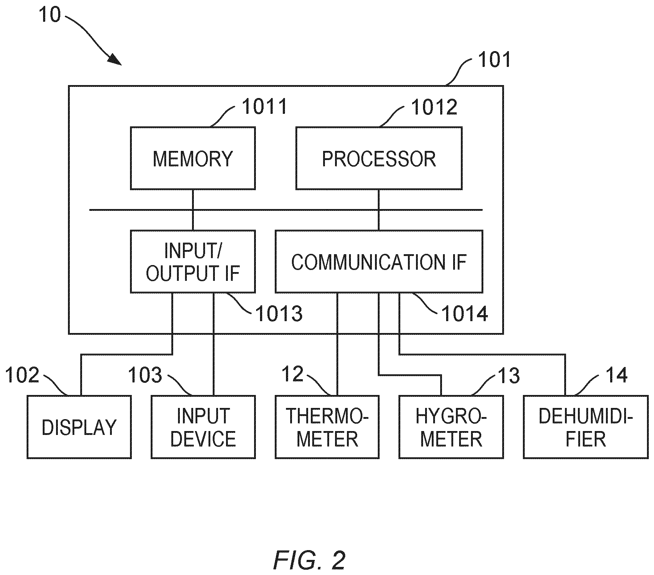

Figure 2 shows the configuration of a computer 10 used as the hardware of management device 11. Computer 10 includes a computer main body 101, a display 102 connected to computer main body 101, and an input device 103 (such as a keyboard and a mouse) connected to computer main body 101.

Computer main body 101 includes a memory 1011 for storing various data including programs, a processor 1012 for performing various data processing operations in accordance with the programs, an input/output interface 1013, which is an interface for inputting and outputting data to and from external devices without using a network, and a communication interface 1014, which is an interface for performing data communication with external devices via a network.

Display 102 and input device 103 are connected to input/output interface 1013. Communication interface 1014 performs data communication with thermometers 12, hygrometers 13, dehumidifier 14, and a weather information distribution server device 8.

Thermometers 12 are devices for measuring temperature, and are each equipped to have a communication function and to sequentially transmit to management device 11 measured temperature data indicating continuously measured temperatures. At least one thermometer 12 is installed outside hold 91, and at least one thermometer 12 is installed inside hold 91. In the present embodiment, as an example, system 1 is assumed to include thermometer 12A installed outside hold 91 and thermometers 12B to 12G installed inside hold 91.

Temperatures measured by thermometers 12A to 12G are as follows.
Thermometer 12A measures a temperature of air (external air) in the space outside hold 91.
Thermometer 12B measures a temperature of air (internal air) in the space inside hold 91.
Thermometer 12C measures a temperature of an inner surface of a hatch cover portion of hold 91.
Thermometer 12D measures a temperature of an inner surface of a cross-deck portion of hold 91.
Thermometer 12E measures a temperature of an inner surface of an upper side wall portion of hold 91.
Thermometer 12F measures a temperature of an inner surface of a side wall portion of hold 91.
Thermometer 12G measures a temperature of a surface of cargo L.

Hygrometers 13 are devices used for measuring an absolute humidity of air. Hereafter, the term "humidity" refers to absolute humidity.

Hygrometers 13 are each equipped to have a communication function and to sequentially transmit to management device 11 measured humidity data indicating continuously measured humidity.

At least one hygrometer 13 is installed outside hold 91, and at least one hygrometer 13 is installed inside hold 91. In the present embodiment, as an example, system 1 is assumed to include hygrometer 13A installed outside hold 91 and hygrometers 13B to 13G installed inside hold 91.

Humidity measured by hygrometers 13A to 13G is as follows.
Hygrometer 13A measures a humidity of the air (external air) in the space outside hold 91.
Hygrometer 13B measures a humidity of the air (internal air) in the space inside hold 91.
Hygrometer 13C measures a humidity of the air in contact with the inner surface of the hatch cover portion of hold 91.
Hygrometer 13D measures a humidity of the air in contact with the inner surface of the cross-deck portion of hold 91.
Hygrometer 13E measures a humidity of the air in contact with the inner surface of the upper-side wall portion of hold 91.
Hygrometer 13F measures a humidity of the air in contact with the inner surface of the side wall portion of hold 91.
Hygrometer 13G measures a humidity of the air in contact with the surface of cargo L.

Dehumidifier 14 is a device that performs dehumidification of the air in hold 91. Dehumidifier 14, for example, takes air into the main unit, cools the air to condense water vapor in the air, and stores water generated by the condensation in a tank, thereby reducing a humidity of the air.

Dehumidifier 14 is equipped to have a communication function and starts or stops operation in accordance with control data sent from management device 11.

Management device 11 included in system 1 performs data communication with weather information distribution server device 8. When ship 9 is at sea, management device 11 performs data communication with weather information distribution server device 8, for example, via a satellite communication network. When ship 9 is docked in a port, management device 11 performs data communication with weather information distribution server device 8 through a wireless communication access point, such as WiFi (registered trademark), in accordance with communication standards at the port.

Weather information distribution server device 8 is a device that sends data (hereinafter referred to as "weather forecast data") indicating forecast values of weather parameters, such as a temperature, in response to requests from external devices. Management device 11 sends a request to weather information distribution server device 8, which includes a geographic location (latitude and longitude) and a date and time at which ship 9 will pass that location or arrive at that location during its voyage. Management device 11 receives weather forecast data sent from weather information distribution server device 8 in response to the request, which indicates the forecast values of weather parameters for the location and the date/time specified in the request. In this embodiment, as an example, the weather forecast data that management device 11 receives from weather information distribution server device 8 includes the following: temperature forecast data indicating a forecast value of air temperature, humidity forecast data indicating a forecast value of air humidity, seawater temperature forecast data indicating a forecast value of seawater temperature, wind direction forecast data indicating a forecast value of wind direction, wind speed forecast data indicating a forecast value of wind speed, tidal direction forecast data indicating a forecast value of tidal direction, and tidal speed forecast data indicating a forecast value of tidal speed.

It is noted that in this embodiment, temperature and humidity are each examples of environmental parameters in the present invention. Furthermore, the temperature forecast values shown by the temperature forecast data and seawater temperature forecast data in this embodiment, as well as the humidity forecast values shown by the humidity forecast data, are each examples of the forecast values of external environmental parameters, which are forecasts of future environmental parameters outside hold 91.

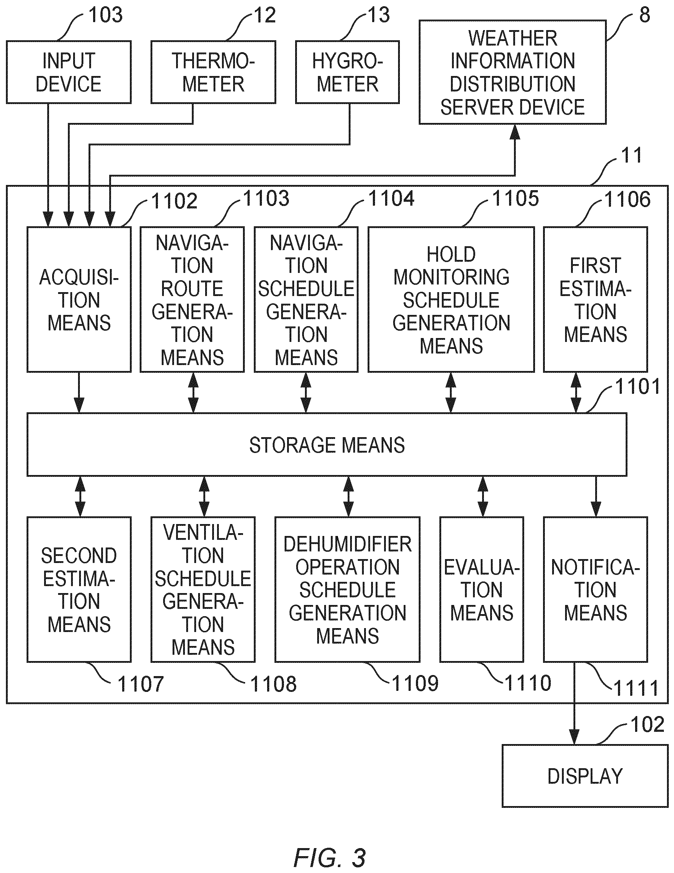

Figure 3 shows the functional configuration of management device 11. When processor 1012 of computer 10 performs various data processing in accordance with the program related to this embodiment, the processor functions as a device equipped with the components shown in Figure 3. The roles of each component of management device 11 shown in Figure 3 are explained below.

Storage means 1101 stores various types of data.

Acquisition means 1102 acquires various types of data from external devices. The data acquired by acquisition means 1102 is stored in storage means 1101. The data acquired by acquisition means 1102 includes the following:
(1) Constraint condition data input from input device 103 in response to user operations carried out at the management device 11.
(2) Weather forecast data sent from weather information distribution server device 8 in response to a request transmitted thereto.
(3) Measured temperature data sent sequentially from each of thermometers 12.
(4) Measured humidity data sent sequentially from each of hygrometers 13.

In this embodiment, as an example, the following constraints are assumed:
(A) A port where cargo is loaded (hereinafter referred to as the "loading port") and a date and time when ship 9 departs from the loading port (hereinafter referred to as the "loading port departure date and time") are specified by the user. These conditions are not changed by management device 11.
(B) The port where the cargo is unloaded (hereinafter referred to as the "unloading port") and the date and time when ship 9 arrives at the unloading port (hereinafter referred to as the "unloading port arrival date and time") are specified by the user. These conditions are not changed by management device 11.

The constraint condition data in (1) above refers to constraints relating to the loading port, loading port departure date and time, unloading port, and unloading port arrival date and time, as described in constraints (A) and (B).

Navigation route generation means 1103 generates candidate navigation route data, which shows multiple candidate navigation routes (hereafter referred to as "candidate navigation routes") from the loading port to the unloading port, as indicated by the constraint condition data.

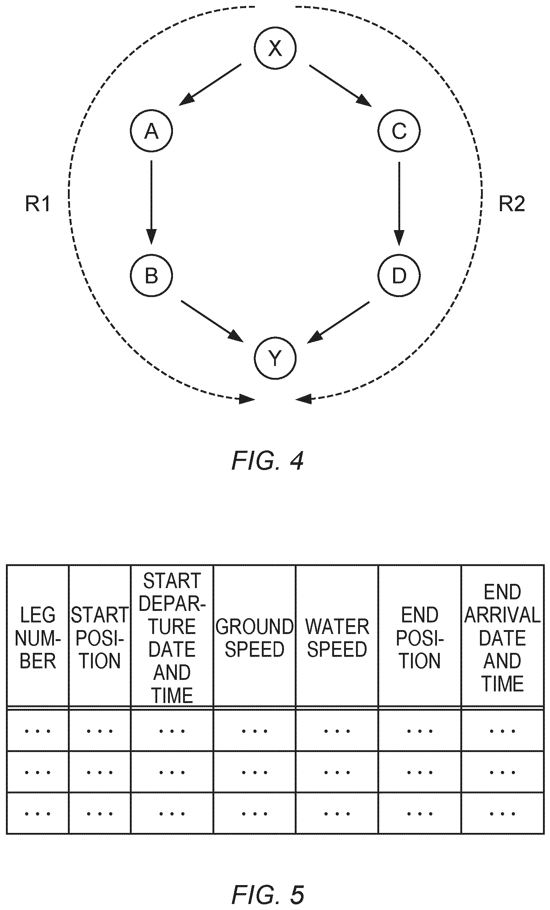

Figure 4 illustrates candidate navigation route data generated by navigation route generation means 1103. In Figure 4, a port X is the loading port, and a port Y is the unloading port. In Figure 4, as candidates for the navigation route from port X to port Y, a navigation route R1 is shown, which passes through points A and B, and a navigation route R2 is shown, which passes through points C and D. Navigation route R1 is a navigation route with a shortest sailing distance, while navigation route R2 is a navigation route with a second shortest sailing distance. Selection of the passage points is determined based on factors such as a distance that ship 9 can travel without refueling. Navigation route generation means 1103 generates candidate navigation route data, with navigation route R1 as the first candidate navigation route and navigation route R2 as the second candidate navigation route. In the example shown in Figure 4, there are two candidate navigation routes, but the number of candidate navigation routes may be three or more.

Navigation schedule generation means 1104 (Figure 3) generates navigation schedule data that indicates the navigation schedule for ship 9 for navigation according to one selected candidate navigation route chosen from among the multiple candidate navigation routes shown in the candidate navigation route data generated by navigation route generation means 1103, based on their ranking.

In this embodiment, management of the navigation schedule is carried out on the basis of each of a segment (hereafter referred to as a "leg") that is obtained by dividing the navigation route into multiple sections, each corresponding to a predetermined distance. In this embodiment, a length of one leg is such that ship 9 can navigate it from within a few minutes to within about ten minutes. Figure 5 shows the configuration of the navigation schedule data. The navigation schedule data is a table comprising multiple records, with each record storing data related to a leg. Each record of the navigation schedule data has the following fields:
"Leg Number" field: Stores data indicating an order of the leg.
"Start Position" field: Stores data indicating a latitude and longitude of the start point of the leg.
"Start Departure Date and Time" field: Stores data indicating a date and time when ship 9 departs from the starting point of the leg.
"Ground Speed" field: Stores data indicating a ground speed at which ship 9 navigates during the leg.
"Water Speed" field: Stores data indicating a water speed at which ship 9 navigates during the leg.
"End Position" field: Stores data indicating a latitude and longitude of the endpoint of the leg.
"End Arrival Date and Time" field: Stores data indicating a date and time when ship 9 arrives at the endpoint of the leg.

It is noted that the data stored in the "Start Position" field of each record is the same as the data stored in the "End Position" field of the previous record in the table.

Navigation schedule generation means 1104 first generates a provisional navigation schedule in which ship 9 departs from the loading port at the loading port departure date and time, navigates at a constant ground speed according to the navigation route, and arrives at the unloading port at the unloading port arrival date and time.

Ship 9 may stop at passage points or other locations along the navigation route for fuel replenishment or other purposes during its voyage. In this embodiment, a special leg referred to as a "dummy leg" is used to manage the temperature and other conditions inside hold 91 while ship 9 is docked. The dummy leg has both start and end positions that indicate a same location at which ship 9 is docked. Both the ground speed and water speed are set to 0 knots (or left blank), and the time from the start departure date and time to the end arrival date and time is a predetermined duration (for example, 10 minutes). One or more consecutive dummy legs included in the navigation schedule data indicate that ship 9 is docked at the location specified by the start position (or end position) of these dummy legs during the period from the start departure date and time of the first record of these dummy legs to the end arrival date and time of the last record of these dummy legs.

Next, navigation schedule generation means 1104 sends a request containing data indicating the start positions and the start departure dates and times of each leg shown in the provisional navigation schedule to weather information distribution server device 8 via acquisition means 1102. In response, weather information distribution server device 8 sends the weather forecast data, which is then acquired via acquisition means 1102. Navigation schedule generation means 1104, based on the wind direction, wind speed, tidal direction, tidal speed, and other factors indicated by the weather forecast data obtained from weather information distribution server device 8, identifies the water speed at which ship 9 would navigate during each leg (excluding dummy legs) of the provisional navigation schedule, assuming the ship navigates at the ground speed specified for each leg.

Next, navigation schedule generation means 1104 modifies the ground speed of the provisional navigation schedule so that the identified water speed approaches a constant value for all legs, excluding the dummy legs. Upon making this modification, navigation schedule generation means 1104 also changes the start departure date and time and the end arrival date and time for each leg of the provisional navigation schedule.

Navigation schedule generation means 1104 repeatedly performs the following process until variations in the water speed of each leg are below a threshold: acquiring the forecast values, such as the wind direction, from weather information distribution server device 8, and modifying the provisional navigation schedule based on the obtained forecast values. Navigation schedule generation means 1104 determines the provisional navigation schedule, where variations in the water speed of each leg (excluding the dummy legs) is below the threshold, as the proposed navigation schedule to be presented to the user, and then generates the navigation schedule data (Figure 5) indicating the navigation schedule.

In addition to the process of generating the aforementioned navigation schedule data, navigation schedule generation means 1104 also performs processes to adjust the navigation schedule to prevent condensation and to adjust the remaining navigation schedule based on information sequentially obtained during the voyage of ship 9. These processes will be described later. The navigation schedule data is sequentially updated during the adjustment processes.

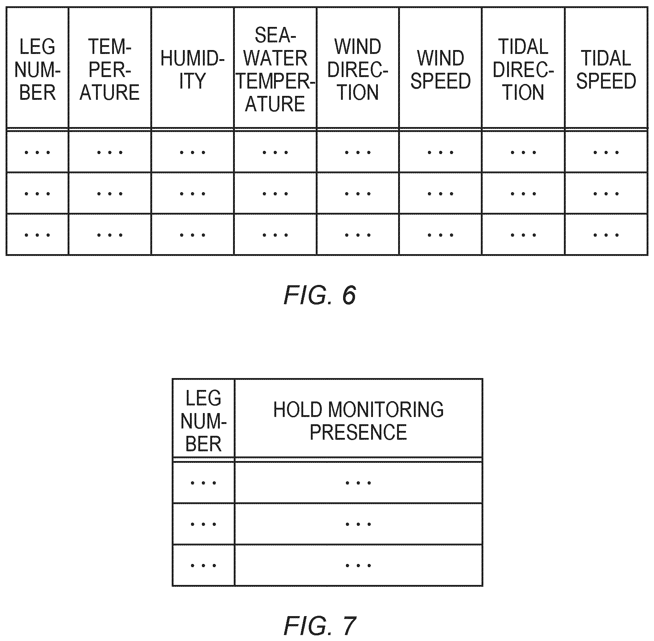

The weather forecast data received by acquisition means 1102 from weather information distribution server device 8 is stored in storage means 1101, associated with the corresponding leg. Figure 6 shows the data configuration of the weather forecast table, which stores the weather forecast data to be saved in storage means 1101. The weather forecast table is a collection of records corresponding to each leg. Each record in the weather forecast table has the following fields:
"Leg Number" field: Stores data indicating the order of the leg.
"Temperature" field: Stores the forecast air temperature at the start position and the start departure date and time of the leg.
"Humidity" field: Stores the forecast humidity at the start position and the start departure date and time of the leg.
"Seawater Temperature" field: Stores the forecast seawater temperature at the start position and the start departure date and time of the leg.
"Wind Direction" field: Stores the forecast wind direction at the start position and the start departure date and time of the leg.
"Wind Speed" field: Stores the forecast wind speed at the start position and the start departure date and time of the leg.
"Tidal Direction" field: Stores the forecast tidal direction at the start position and start departure date and time of the leg.
"Tidal Speed" field: Stores the forecast tidal speed at the start position and the start departure date and time of the leg.

The data stored in the weather forecast table is sequentially updated in response to changes in the navigation schedule, the acquisition of new weather forecast data, and other related factors.

Hold monitoring schedule generation means 1105 (Figure 3) determines a period during which the crew members enter hold 91 to observe (monitor) a condition of cargo L, and to perform other actions, such as visually inspecting the interior (hereafter referred to as the "hold monitoring period"), while ship 9 is navigating along the navigation route in accordance with the navigation schedule. Hold monitoring schedule generation means 1105 then generates the hold monitoring schedule data that indicates the determined hold monitoring period. Generally, a frequency of hold monitoring and other related details are determined by agreement between the shipper of cargo L and the company operating ship 9. Hold monitoring schedule generation means 1105 determines the hold monitoring schedule in accordance with terms of the agreement between the shipper of cargo L and the company operating ship 9. The hold monitoring schedule data generated by hold monitoring schedule generation means 1105 is stored in storage means 1101.

Figure 7 shows the configuration of the hold monitoring schedule data. Hold monitoring is scheduled in accordance with conditions (for example, 3 times a day) for one hour every 8 hours, (including time for ventilation before the crew enters hold 91). In this embodiment, to align with the time axis of other parameters (for example, the ground speed included in the navigation schedule data (Figure 5) and the temperature included in the weather forecast data (Figure 6)), and a presence or absence of hold monitoring scheduled accordingly is managed on a leg-by-leg basis. As a result, the hold monitoring schedule data is comprised of a collection of records identified by leg number. Each record has a "Hold monitoring Presence" field, which indicates whether monitoring is scheduled for that particular leg. The "Hold monitoring Presence" field contains "Yes" if the period during which the leg is navigated is included in the hold monitoring period, and "No" if it is not included. In other words, the period during which ship 9 navigates the legs corresponding to multiple consecutive records with "Yes" stored in the "Hold monitoring Presence" field is the hold monitoring period.

The hold monitoring period refers to the period during which the access door to hold 91 is open for crew members to enter and exit in order to observe the condition of cargo L. Cargo in hold 91 may emit gases such as carbon dioxide or may absorb oxygen, thereby causing oxygen levels in hold 91 to become insufficient. Therefore, generally, before the crew enters hold 91, the access door is kept open for a predetermined period of time to allow for ventilation. In this embodiment, the hold monitoring period includes not only the period during which the crew members are inside hold 91, but also the ventilation period prior to their entry, during which the access door is open for ventilation.

First estimation means 1106 (Figure 3) generates estimated values for the future temperature and humidity inside hold 91 based on the forecast temperature and humidity values indicated by the weather forecast data. The estimated values for the temperature and humidity generated by first estimation means 1106 are examples of the estimated values of hold internal environmental parameters in this invention.

More specifically, first estimation means 1106, based on the weather forecast table (Figure 6) and the hold monitoring schedule data (Figure 7), estimates the internal temperature of hold 91 at the start departure date and time of each leg, for example, by carrying out a simulation using a known physical model. First estimation means 1106 then generates estimated temperature data that indicates the estimated temperature value.

In this embodiment, the internal temperature of hold 91 estimated by first estimation means 1106 corresponds to the temperatures measured by thermometers 12B to 12G. In other words, first estimation means 1106 estimates the temperature of the air (internal air) in the hold 91, the temperature of the inner surface of the hatch cover portion of hold 91, the temperature of the inner surface of the cross-deck portion of hold 91, the temperature of the inner surface of the upper side wall portion of hold 91, the temperature of the inner surface of the side wall portion of hold 91, and the temperature of the surface of cargo L.

In the simulation of the internal air temperature of hold 91 carried out by first estimation means 1106 using a physical model, thermal conductivity and other properties of the structural walls constituting hold 91 (such as the hatch cover and cross-deck portions) are included.

In the simulation of the internal air temperature of hold 91 carried out by the first estimation means 1106, based on the air temperature outside the access door and the air temperature inside the access door (i.e., inside hold 91) just before the access door is opened in accordance with the hold monitoring schedule, a direction and amount of air movement through the access door during the opening period are estimated. The internal air temperature of hold 91, which changes over time due to air movement, is then estimated.

First estimation means 1106 estimates the internal humidity of hold 91 at the departure date and time of each leg by carrying out simulations using known physical models based on the weather forecast table (Figure 6) and the hold monitoring schedule data (Figure 7). First estimation means 1106 then generates estimated humidity data indicating the estimated humidity values.

In this embodiment, the internal humidity of hold 91 estimated by first estimation means 1106 corresponds to the humidity measured by hygrometers 13B through 13G. In other words, first estimation means 1106 estimates the humidity of the air (internal air) in the inner space of hold 91, the humidity of the air in contact with the inner surface of the hatch cover portion of hold 91, the humidity of the air in contact with the inner surface of the cross-deck portion of hold 91, the humidity of the air in contact with the inner surface of the upper side wall portion of hold 91, the humidity of the air in contact with the inner surface of the side wall portion of hold 91, and the humidity of the air in contact with the surface of cargo L.

In the simulation of the internal humidity of hold 91 carried out by first estimation means 1106 using a known physical model, the direction and amount of air movement through the access door is estimated as described above, along with the humidity of the air outside the access door and the humidity of the air inside the access door (i.e., inside hold 91) just before the access door is opened in accordance with the hold monitoring schedule, and the humidity of the air is estimated at each of a measurement position inside hold 91, which changes moment by moment.

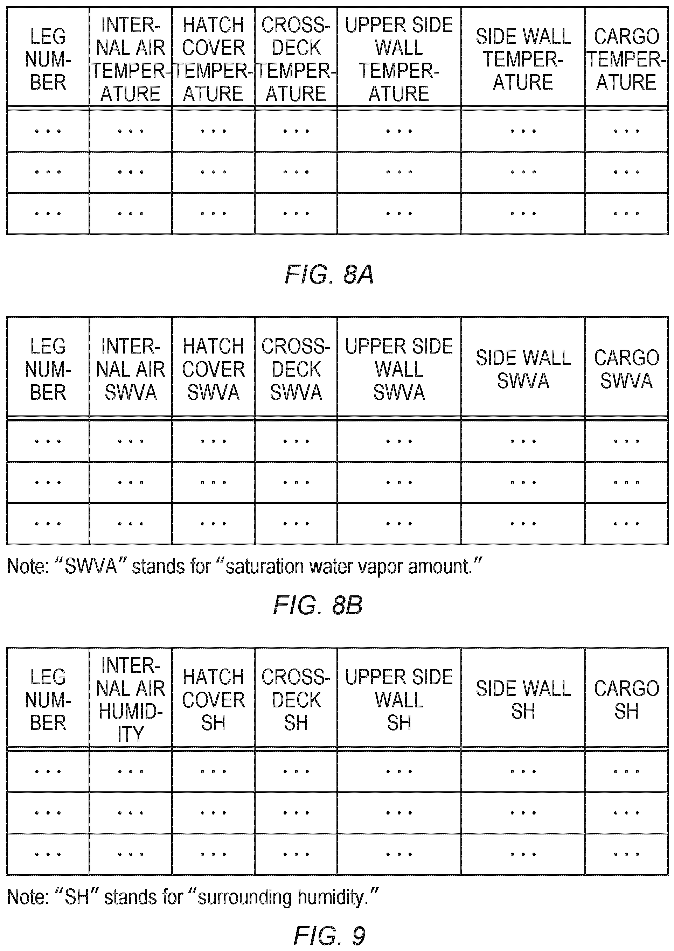

The estimated temperature data and estimated humidity data generated by first estimation means 1106 are stored in storage means 1101. Figure 8A shows the data configuration of the hold temperature estimation table used to store estimated temperature data. The hold temperature estimation table is a collection of records corresponding to each leg.

Each record of the hold temperature estimation table has the following fields:
"Leg Number" field: Stores data indicating the order of the leg.
"Internal Air Temperature" field: Stores estimated temperature data indicating the estimated temperature of the internal air at the start position and the departure time of the leg.
"Hatch Cover Temperature" field: Stores estimated temperature data indicating the estimated temperature of the inner surface of the hatch cover portion of hold 91 at the start position and the departure time of the leg.
"Cross-Deck Temperature" field: Stores estimated temperature data indicating the estimated temperature of the inner surface of the cross-deck portion of hold 91 at the start position and the departure time of the leg.
"Upper Side Wall Temperature" field: Stores estimated temperature data indicating the estimated temperature of the inner surface of the upper side wall portion of hold 91 at the start position and the departure time of the leg.
"Side Wall Temperature" field: Stores estimated temperature data indicating the estimated temperature of the inner surface of the side wall portion of hold 91 at the start position and the departure time of the leg.
"Cargo Temperature" field: Stores estimated temperature data indicating the estimated temperature of the surface of cargo L at the start position and the departure time of the leg.

Figure 8B shows the data configuration of the saturation water vapor amount estimation table, which is used to store saturation water vapor amount estimation data indicating the saturation water vapor amounts corresponding to the estimated temperatures of the hatch cover and other components, as stored in the hold temperature estimation table (Figure 8A). The saturation water vapor amount estimation table is a collection of records corresponding to each leg.

Each record of the saturation water vapor amount estimation table has the following fields:
"Leg Number" field: Stores data indicating the order of the leg.
"Internal Air Saturation Water Vapor Amount" field: Stores saturation water vapor amount estimation data indicating the saturation water vapor amount corresponding to the estimated temperature of the internal air at the start position and the departure time of the leg.
"Hatch Cover Saturation Water Vapor Amount" field: Stores saturation water vapor amount estimation data indicating the saturation water vapor amount corresponding to the estimated temperature of the inner surface of the hatch cover portion of hold 91 at the start position and the departure time of the leg.
"Cross-Deck Saturation Water Vapor Amount" field: Stores saturation water vapor amount estimation data indicating the saturation water vapor amount corresponding to the estimated temperature of the inner surface of the cross-deck portion of hold 91 at the start position and the departure time of the leg.
"Upper Side Wall Saturation Water Vapor Amount" field: Stores saturation water vapor amount estimation data indicating the saturation water vapor amount corresponding to the estimated temperature of the inner surface of the upper side wall portion of hold 91 at the start position and the departure time of the leg.
"Side Wall Saturation Water Vapor Amount" field: Stores saturation water vapor amount estimation data indicating the saturation water vapor amount corresponding to the estimated temperature of the inner surface of the side wall portion of hold 91 at the start position and the departure time of the leg.
"Cargo Saturation Water Vapor Amount" field: Stores saturation water vapor amount estimation data indicating the saturation water vapor amount corresponding to the estimated temperature of the surface of cargo L at the start position and the departure time of the leg.

The saturation water vapor amount estimation data stored in the saturation water vapor amount estimation table is determined, for example, by first estimation means **1106** based on the corresponding estimated temperature data stored in the hold temperature estimation table, in accordance with a known calculation formula or conversion table.

Figure 9 shows the data configuration of the hold humidity estimation table used by storage means 1101 to store estimated humidity data. The hold humidity estimation table is a collection of records corresponding to each leg. Each record of the hold humidity estimation table has the following fields:
"Leg Number" field: Stores data indicating the order of the leg.
"Internal Air Humidity" field: Stores estimated humidity data indicating the estimated humidity of the internal air at the start position and the departure time of the leg.
"Hatch Cover Surrounding Humidity" field: Stores estimated humidity data indicating the estimated humidity of the air in contact with the inner surface of the hatch cover portion of hold 91 at the start position and the departure time of the leg.
"Cross-Deck Surrounding Humidity" field: Stores estimated humidity data indicating the estimated humidity of the air in contact with the inner surface of the cross-deck portion of hold 91 at the start position and the departure time of the leg.
"Upper Side Wall Surrounding Humidity" field: Stores estimated humidity data indicating the estimated humidity of the air in contact with the inner surface of the upper side wall portion of hold 91 at the start position and the departure time of the leg.
"Side Wall Surrounding Humidity" field: Stores estimated humidity data indicating the estimated humidity of the air in contact with the inner surface of the side wall portion of hold 91 at the start position and the departure time of the leg.
"Cargo Surrounding Humidity" field: Stores estimated humidity data indicating the estimated humidity of the air in contact with the surface of cargo L at the start position and the departure time of the leg.

First estimation means 1106 re-estimates the internal air temperature and humidity, reflecting the results of ventilation and dehumidification indicated by the ventilation schedule generated by ventilation schedule generation means 1108 and the dehumidification schedule generated by dehumidifier operation schedule generation means 1109, respectively, and updates the hold temperature estimation table (Figure 8A), saturation water vapor amount estimation table (Figure 8B), and hold humidity estimation table (Figure 9). First estimation means 1106 re-estimates the internal air temperature and humidity during the voyage of ship 9 based on the measured temperature data acquired from thermometers 12, measured humidity data from hygrometers 13, and weather estimation data from weather information distribution server device 8, updating the hold temperature estimation table (Figure 8A), saturation water vapor amount estimation table (Figure 8B), and hold humidity estimation table (Figure 9).

The second estimation means 1107 (Figure 3) generates an estimated value of the future quality of cargo L stored in hold 91, based on the estimated future values of the saturation water vapor amount and humidity inside hold 91 (the estimated values of hold internal environmental parameters) provided by first estimation means 1106, that is, based on the values indicated by the saturation water vapor amount estimation data stored in the saturation water vapor amount estimation table (Figure 8B) and the estimated humidity data stored in the hold humidity estimation table (Figure 9). The estimated value of the future quality of cargo L generated by second estimation means 1107 is an example of the estimated value of cargo quality in the present invention.

In this embodiment, deterioration in the quality of steel coils (cargo L) is primarily due to formation of rust. The most significant factor influencing a probability of rust formation is the occurrence of condensation in hold 91, including a duration of the condensation and an amount of water droplets formed. Therefore, in this embodiment, second estimation means 1107 estimates the occurrence of condensation inside hold 91 for each leg and identifies which of the following levels 1 to 3 the estimated occurrence corresponds to. The level thus specified (hereinafter referred to as "condensation occurrence level") serves as an index indicating a degree of risk of deterioration in quality of cargo L. In this case, the larger the numerical value of the condensation occurrence level, the higher the risk of deterioration in quality of cargo L (i.e., the lower the quality of cargo L).

The condensation occurrence levels are defined as follows, for example:
Level 1: Condensation is estimated not to occur.
Level 2: Condensation is estimated to occur on any one of the hatch cover, cross-deck, upper side wall, or side wall.
Level 3: Condensation is estimated to occur on two or more of the hatch cover, cross-deck, upper side wall, or side wall.

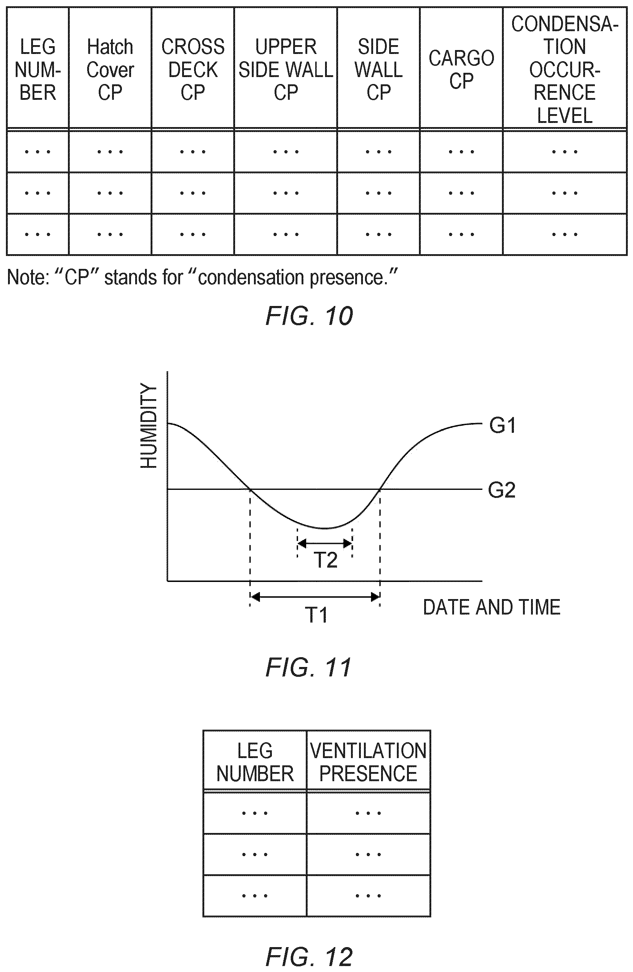

Figure 10 shows the data configuration of the cargo quality estimation table, which is utilized by second estimation means 1107 to store the condensation occurrence levels (values indicative of the quality of cargo L) and the data used to determine these levels. The cargo quality estimation table is a collection of records corresponding to each leg. Each record of the cargo quality estimation table has the following fields:
"Leg Number" field: Stores data indicating the order of the leg.
"Hatch Cover Condensation Presence" field: Stores flag data indicating whether condensation occurs on the inner surface of the hatch cover portion of hold 91. The flag data is, for example, "Yes" if condensation occurs and "No" if no condensation occurs.
"Cross Deck Condensation Presence" field: Stores flag data indicating whether condensation occurs on the inner surface of the cross-deck portion of hold 91.
"Upper Side Wall Condensation Presence" field: Stores flag data indicating whether condensation occurs on the inner surface of the upper side wall portion of hold 91.
"Side Wall Condensation Presence" field: Stores flag data indicating whether condensation occurs on the inner surface of the side wall portion of hold 91.
"Cargo Condensation Presence" field: Stores flag data indicating whether condensation occurs on the surface of cargo L.
"Condensation Occurrence Level" field: Stores the condensation occurrence level determined based on the flag data stored in the "Hatch Cover Condensation Presence" to "Cargo Condensation Presence" fields.

Second estimation means 1107 determines the occurrence of condensation on various surfaces in hold 91, including the inner surfaces of the hatch cover, cross deck, upper side wall, side wall, and the surface of cargo L, by comparing absolute humidity values from the hold humidity estimation table (Figure 9) with corresponding saturation water vapor amounts from the saturation water vapor amount estimation table (Figure 8B). If the absolute humidity equals or exceeds the saturation amount, condensation is deemed to be present, and a "Yes" flag is stored in the relevant field (e.g., "Hatch Cover Condensation Presence") of the cargo quality estimation table (Figure 10). Conversely, if the absolute humidity is below the saturation amount, condensation is considered absent, and a "No" flag is recorded in the corresponding field. If the absolute humidity indicated by the corresponding estimated humidity data stored in the hold humidity estimation table (Figure 9) is less than the saturated water vapor amount indicated by the corresponding saturated water vapor amount estimation data stored in the saturation water vapor amount estimation table (Figure 8B), second estimation means 1107 determines that condensation is not present and stores the flag data "No" in the corresponding field (such as the "Hatch Cover Condensation Presence" field) of the cargo quality estimation table.

Next, second estimation means 1107 determines the condensation occurrence level for the leg based on the number of "Yes" entries in the "Hatch Cover Condensation Presence" to "Cargo Condensation Presence" fields, and stores the corresponding level (a value between 1 and 3) in the "Condensation Occurrence Level" field of the cargo quality estimation table.

Second estimation means 1107 updates the cargo quality estimation table (Figure 10) by re-determining the presence or absence of condensation for each item in the table, using the updated saturation water vapor amount estimation table and the updated hold humidity estimation table, in cases where the hold temperature estimation table (Figure 8A), the saturation water vapor amount estimation table (Figure 8B), or the hold humidity estimation table (Figure 9) has been updated by first estimation means 1106 in response to the generation of a ventilation schedule by ventilation schedule generation means 1108 or the generation of a dehumidifier operation schedule by dehumidifier operation schedule generation means 1109, as described later. While ship 9 is at sea, second estimation means 1107 updates the cargo quality estimation table (Figure 10) by re-determining, with respect to the remainder of the voyage, the presence or absence of condensation and other factors for each item in the table, using the updated saturation water vapor amount estimation table and the updated hold humidity estimation table, in cases where the hold temperature estimation table (Figure 8A), the saturation water vapor amount estimation table (Figure 8B), or the hold humidity estimation table (Figure 9) has been updated by first estimation means 1106 based on measured temperature data acquired from thermometers 12, measured humidity data acquired from hygrometers 13, or estimated weather data acquired from weather information distribution server device 8, via acquisition means 1102.

Ventilation schedule generation means 1108 (Figure 3) determines a period during which ventilation windows installed in hold 91 are to be opened (hereinafter referred to as the "ventilation period") in order to prevent condensation when it is estimated that condensation will occur during the navigation period as ship 9 navigates along the navigation route in accordance with the navigation schedule, and generates ventilation schedule data indicating the determined ventilation period.

In the present embodiment, ventilation schedule generation means 1108 determines the ventilation period based on, for example, the forecast external humidity indicated by the humidity forecast data stored in the "Humidity" field of the weather forecast table (Figure 6), and the estimated internal humidity indicated by the estimated humidity data stored in the "Internal Air Humidity" field of the hold humidity estimation table (Figure 9).

Figure 11 shows graphs explaining an example of the method by which ventilation schedule generation means 1108 determines the ventilation period. The horizontal axis in Figure 11 represents date and time, and the vertical axis represents humidity. Graph G1 shows the changes over time in the forecast external humidity, while graph G2 shows the changes over time in the estimated internal humidity.

The graphs shown in Figure 11 illustrate a case in which there is no opening of the access door during the period defined by the hold monitoring schedule, and since hold 91 remains sealed, the internal humidity shown in graph G2 remains generally constant. This is due to the fact that, in the present embodiment, cargo L is composed of steel coils, which exhibit minimal moisture evaporation or absorption. For example, if cargo L is a type of material such as wood that evaporates or absorbs moisture, the internal humidity may vary significantly even during periods when hold 91 remains sealed.

Ventilation schedule generation means 1108 first identifies a period that satisfies the following conditions:
(1) The period during which the external humidity shown by graph G1 remains lower than the internal humidity shown by graph G2 continues for a predetermined duration (e.g., 2 hours) or longer.
(2) Within the period identified in (1), the maximum difference between the humidity indicated by graph G1 and that indicated by graph G2 is equal to or greater than a predetermined threshold (e.g., 10%).
(3) If there are two or more periods that meet conditions (1) and (2), the earliest of those periods is selected.

Ventilation schedule generation means 1108 identifies, for example, the period T1 as a period that satisfies the above conditions (1) to (3) within the time range corresponding to the horizontal axis of the graph shown in Figure 11.

Subsequently, ventilation schedule generation means 1108 determines, as the ventilation period, a predetermined duration (e.g., 1 hour) centered on the date and time at which the difference between the humidity shown by graph G1 and that shown by graph G2 reaches its maximum within the identified period, such as the period T2 shown in Figure 11. The ventilation schedule data generated by ventilation schedule generation means 1108 is stored in the storage means 1101.

Figure 12 shows the configuration of the ventilation schedule data. The ventilation schedule data comprises a collection of records identified by log numbers, and each record has a "Ventilation Presence" field. In the "Ventilation Presence" field, "Yes" is stored if ventilation is performed during the corresponding log entry while the ship is in transit, and "No" is stored if ventilation is not performed. That is, the period during which ship 9 is navigating the legs corresponding to multiple consecutive records in which "Yes" is stored in the "Ventilation Presence" field is defined as the ventilation period.

In the present embodiment, it is assumed that the ventilation windows will be opened by the crew during the ventilation period determined as described above. Alternatively, system 1 may be equipped with an opening/closing device that opens and closes the ventilation windows in accordance with control data transmitted, for example, from management device 11, and the ventilation windows may be opened and closed by the opening/closing device based on the control data sent by management device 11 in accordance with the ventilation schedule.

As described above, when the ventilation schedule data is generated by ventilation schedule generation means 1108, first estimation means 1106 re-estimates the internal air temperature, saturation water vapor amount, and humidity assuming that ventilation is performed according to the ventilation schedule indicated by the generated ventilation schedule data, and updates the hold temperature estimation table (Figure 8A), the saturation water vapor amount estimation table (Figure 8B), and the hold humidity estimation table (Figure 9).

If condensation is still estimated to occur inside hold 91 during the navigation period even after ventilation is performed during the ventilation period identified by ventilation schedule generation means 1108, a new ventilation period is identified from a time range later than the already identified ventilation period (or the latest one, if multiple ventilation periods have been identified) within the navigation period. In that case, ventilation schedule generation means 1108 updates the ventilation schedule data (Figure 12) to include the newly identified ventilation period in addition to the already identified ventilation periods. First estimation means 1106 re-estimates the internal air temperature and humidity assuming that ventilation is performed according to the updated ventilation schedule indicated by the updated ventilation schedule data, and updates the hold temperature estimation table (Figure 8A), the saturation water vapor amount estimation table (Figure 8B), and the hold humidity estimation table (Figure 9).

Dehumidifier operation schedule generation means 1109 (Figure 3) determines a period during which dehumidifier 14 is to be operated (hereinafter referred to as the "dehumidification period") in order to prevent condensation when it is estimated that condensation will occur during a navigation period as ship 9 navigates along the navigation route in accordance with the navigation schedule, and generates dehumidifier operation schedule data indicating the determined dehumidification period.

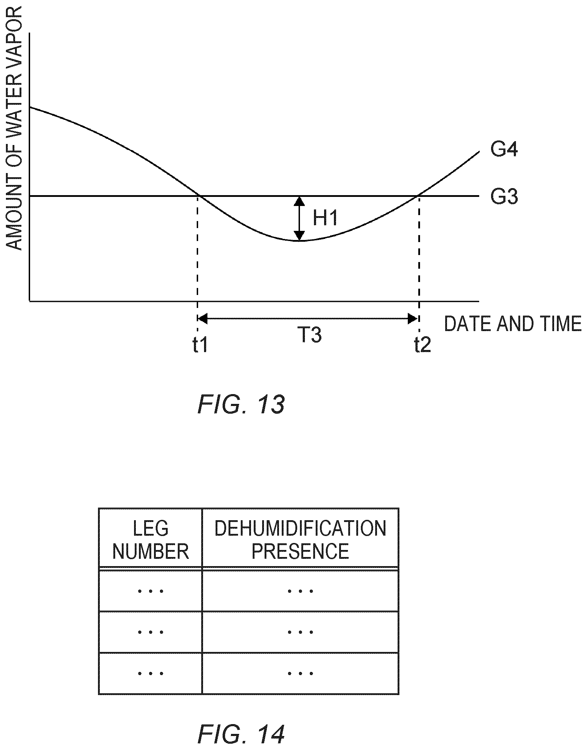

Figure 13 shows graphs explaining an example of the method by which dehumidifier operation schedule generation means 1109 determines the dehumidification period. The horizontal axis of the graph in Figure 13 represents date and time, and the vertical axis represents the amount of water vapor. Graph G3 shown in Figure 13 represents, for example, changes over time in the amount of water vapor (absolute humidity) contained in the air per unit volume that is in contact with the inner surface of the cross-deck area, as indicated by the estimated humidity data stored in the "Cross-Deck Surrounding Humidity" field of the hold humidity estimation table (Figure 9).

Graph G4 shown in Figure 13 represents the changes over time in the saturation water vapor amount of the air in contact with the inner surface of the cross-deck area of hold 91, as indicated by the saturation water vapor amount estimation data stored in the "Cross-Deck Saturation Water Vapor Amount" field of the saturation water vapor amount estimation table (Figure 8B).

The graphs in Figure 13 indicate that condensation is estimated to occur on the inner surface of the cross-deck area of hold 91 during the period T3, from the time t1 to the time t2. The graphs in Figure 13 also indicate that in order to prevent the occurrence of condensation, an amount of water vapor represented by H1 needs to be removed from the air in contact with the inner surface of the cross-deck area.

Dehumidifier operation schedule generation means 1109 estimates, for each of the hatch cover, upper side wall, side wall, and cargo, both the period during which condensation is expected to occur and the amount of water vapor that needs to be removed, using a method similar to the one described above for the cross-deck area.

Dehumidifier operation schedule generation means 1109 identifies, as the dehumidification period, a period during which the dehumidifier 14 should be operated so that the largest estimated amount of water vapor to be removed, among those estimated for the hatch cover, cross-deck, upper side wall, side wall, and cargo, is dehumidified from the air before the earliest of the estimated condensation periods for these respective components. Dehumidifier operation schedule generation means 1109 takes into account the temperature and humidity of the air inside hold 91 at the corresponding time when identifying the dehumidification period. The dehumidifier operation schedule data generated by dehumidifier operation schedule generation means 1109 is stored in storage means 1101.

Figure 14 shows the configuration of the dehumidification schedule data. The dehumidification schedule data comprises a collection of records identified by leg numbers, and each record has a "Dehumidification Presence" field. In the "Dehumidification Presence" field, "Yes" is stored if dehumidification is performed during the navigation of the corresponding leg, and "No" is stored if dehumidification is not performed. That is, the period during which ship 9 is navigating the legs corresponding to multiple consecutive records in which "Yes" is stored in the "Dehumidification Presence" field is defined as the dehumidification period.

As described above, when the dehumidification schedule data is generated by dehumidifier operation schedule generation means 1109, first estimation means 1106 re-estimates the internal air temperature, saturation water vapor amount, and humidity assuming that dehumidification is performed according to the dehumidification schedule indicated by the generated data, and updates the hold temperature estimation table (Figure 8A), the saturation water vapor amount estimation table (Figure 8B), and the hold humidity estimation table (Figure 9).

If condensation is still estimated to occur inside hold 91 during the navigation period even after dehumidification is performed during the dehumidification period identified by dehumidifier operation schedule generation means 1109, a new dehumidification period is identified from a time range later than the already identified dehumidification period (or the latest one, if multiple dehumidification periods have been identified) within the navigation period. In that case, dehumidifier operation schedule generation means 1109 updates the dehumidification schedule data (Figure 14) to include the newly identified dehumidification period in addition to the already identified dehumidification periods. First estimation means 1106 re-estimates the internal air temperature, saturation water vapor amount, and humidity assuming that dehumidification is performed according to the updated dehumidification schedule indicated by the updated dehumidification schedule data, and updates the hold temperature estimation table (Figure 8A), the saturation water vapor amount estimation table (Figure 8B), and the hold humidity estimation table (Figure 9).

Evaluation means 1110 (Fig. 3) generates a monetary evaluation value for each combination of navigation route, navigation schedule, and dehumidification schedule, assuming that hold 91 navigates along the navigation route in accordance with the navigation schedule and dehumidification is performed during the navigation in accordance with the dehumidification schedule.

The monetary evaluation value generated by evaluation means 1110 indicates how the cost associated with the navigation increases or decreases when the navigation route, navigation schedule, or dehumidification schedule is changed. Evaluation means 1110 identifies, as the monetary evaluation value, the total costs, including, for example, a fuel cost required for navigation of ship 9, an increase in labor costs for the crew associated with the ventilation operation (opening and closing of the ventilation windows of hold 91), a fuel cost required to operate dehumidifier 14, and a decrease in cargo price resulting from a deterioration in cargo quality.

Notification means 1111 notifies the user of management device 11 of various types of information. In the present embodiment, notification to the user is assumed to be carried out by displaying information on display 102. That is, notification means 1111 notifies the crew by instructing display 102 to present the information.

For example, notification means 1111 notifies the user when the estimated values of hold internal environmental parameters satisfy predetermined conditions. Specifically, notification means 1111 notifies the user, for example, when the estimated humidity value indicated by the data stored in each record of the hold humidity estimation table (Figure 9) increases beyond a threshold as a result of the table being updated.

Notification means 1111 also notifies the user when the estimated value of the cargo quality satisfies predetermined conditions. Specifically, notification means 1111 notifies the user, for example, when the cargo quality estimation table (Figure 10) is updated and the numerical value stored in the "Condensation Occurrence Level" field of the last record (i.e., the record corresponding to the last leg) increases compared to that of the previous record, or when the "Condensation Occurrence Level" values of a predetermined number of records from the end of the table are each either "2" or "3" (i.e., when condensation is estimated to continue for a predetermined period of time).

The above is an explanation of the roles of each component of management device 11 shown in Figure 3.

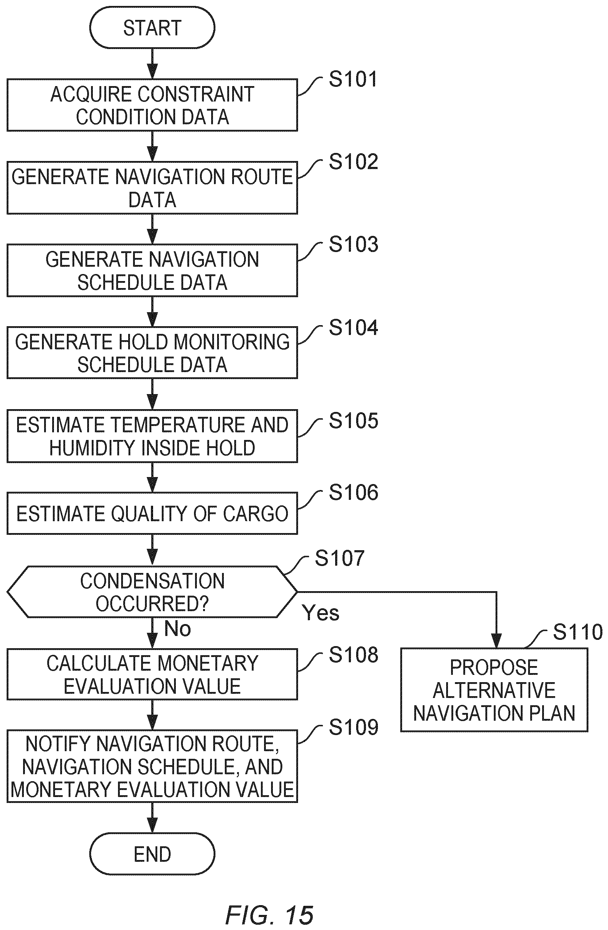

Next, the processing performed by management device 11 will be explained. Management device 11 performs processing to propose a navigation route and a navigation schedule before ship 9 begins departs port. Figure 15 shows the flow of this processing.

First, acquisition means 1102 acquires constraint condition data indicating the loading port, loading port departure date and time, unloading port, and unloading port arrival date and time (Step S101).

Next, navigation route generation means 1103 generates navigation route data indicating a navigation route that satisfies the constraint conditions indicated by the constraint condition data acquired at Step S101 and minimizes the navigation distance (Step S102).

Next, navigation schedule generation means 1104 generates navigation schedule data indicating a navigation schedule in which the ship navigates at a constant water speed along the navigation route indicated by the navigation route data generated at Step S102 (Step S103). Storage means 1101 stores the navigation route data generated at Step S102 (see Figure 5).

In the processing at Step S103, acquisition means 1102 acquires weather forecast data from weather information distribution server device 8, which is required by navigation schedule generation means 1104 to generate the navigation schedule data. Storage means 1101 stores the weather forecast data acquired by acquisition means 1102 in the weather forecast table (Figure 6).

Next, hold monitoring schedule generation means 1105 generates hold monitoring schedule data indicating a hold monitoring schedule corresponding to the navigation schedule indicated by the navigation schedule data generated at Step S103 (Step S104). Storage means 1101 stores the hold monitoring schedule data generated at Step S104 (see Figure 7).

Next, first estimation means 1106 estimates the temperature and humidity inside hold 91 based on the navigation schedule data generated at Step S103, the weather forecast data acquired at Step S103, and the hold monitoring schedule data generated at Step S104, and generates estimated temperature data indicating the estimated temperature, saturation water vapor amount estimation data corresponding to that temperature, and estimated humidity data indicating the estimated humidity (Step S105). Storage means 1101 stores the estimated temperature data generated at Step S105 in the hold temperature estimation table (Figure 8A), the saturation water vapor amount estimation data generated at Step S105 in the saturation water vapor amount estimation table (Figure 8B), and the estimated humidity data generated at Step S105 in the hold humidity estimation table (Figure 9).

Next, second estimation means 1107 estimates the quality of cargo L based on the saturation water vapor amount estimation data and the estimated humidity data generated at Step S105, and generates cargo quality estimation data indicating the estimated values of quality of cargo L (Step S106). More specifically, second estimation means 1107 determines, for each leg, whether condensation occurs on any of the components such as the hatch cover, and identifies the condensation occurrence level, which serves as an index of the quality of cargo L and is an example of the cargo quality estimation data, based on the number of components where condensation is determined to occur. Storage means 1101 stores the data generated at Step S106 in the cargo quality estimation table (Figure 10).

Next, second estimation means 1107 determines whether "2" or "3" is stored in the "Condensation Occurrence Level" field of any leg in the cargo quality estimation table (Figure 10), that is, whether condensation is expected to occur (Step S107).

If it is determined at Step S107 that condensation will not occur (Step S107; No), then, from the perspective of the quality of cargo L, no particular problem exists in following the navigation route generated at Step S102, the navigation schedule generated at Step S103, and the hold monitoring schedule generated at Step S104. Therefore, in the present embodiment, no alternative schedules are generated, and the schedules, along with the monetary evaluation value associated with navigation according to the schedules, are presented to the user. Therefore, evaluation means 1110 calculates the monetary evaluation value for the case where ship 9 navigates along the navigation route indicated by the navigation route data generated at Step S102, in accordance with the navigation schedule indicated by the navigation schedule data generated at Step S103 (Step S108). Next, notification means 1111 notifies the user of the information by instructing display 102 to present the navigation route indicated by the navigation route data generated at Step S102, the navigation schedule indicated by the navigation schedule data generated at Step S103, and the monetary evaluation value calculated at Step S108 (Step S109). Thereafter, management device 11 ends the processing.

If it is determined at Step S107 that condensation will occur (Step S107; Yes), management device 11 executes processing for proposing an alternative navigation plan (Step S110).

In the present embodiment, the alternative navigation plan refers to any of the following:
(1) A navigation plan that proposes the shortest navigation route, a navigation schedule with a constant water speed, and a ventilation schedule to prevent condensation (hereinafter referred to as the "ventilation-based navigation plan").
(2) A navigation plan that proposes the shortest navigation route, a navigation schedule with a constant water speed, and a dehumidification schedule to prevent condensation (hereinafter referred to as the "dehumidification-based navigation plan").
(3) A navigation plan that proposes the shortest navigation route and a navigation schedule with an adjusted water speed to prevent condensation (hereinafter referred to as the "speed-adjusted navigation plan").
(4) A navigation plan that proposes a navigation route that is not the shortest and a navigation schedule with a constant water speed (hereinafter referred to as the "alternative route navigation plan").

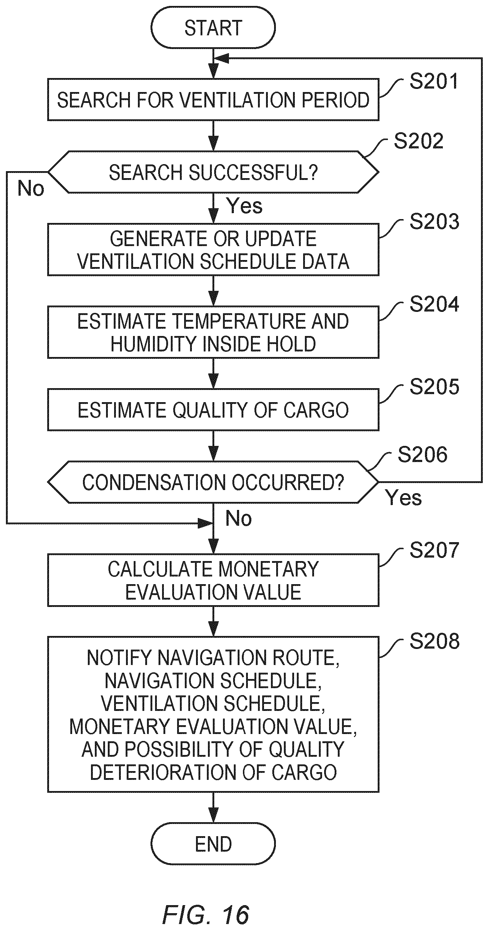

Figure 16 shows the flow of processing performed by management device 11 to propose the ventilation-based navigation plan.

First, ventilation schedule generation means 1108 searches for the ventilation period in the time direction from the start to the end of the navigation period based on the data in the "Humidity" field of the weather forecast table (Figure 6) and the data in the "Internal Air Humidity" field of the hold humidity estimation table (Figure 9) (Step S201).

If a ventilation period is found at Step S201 (Step S202; Yes), ventilation schedule generation means 1108 generates ventilation schedule data (Figure 12) indicating the found ventilation period (Step S203). The processing at Step S201 is repeated based on the results of the judgment at Step S206, and if a new ventilation period is found in addition to the already discovered ventilation period, ventilation schedule generation means 1108 updates the existing ventilation schedule data at Step S203 to reflect both the already discovered and the newly discovered ventilation periods.

Next, first estimation means 1106 estimates the temperature and humidity inside hold 91 based on the navigation schedule data generated at Step S103 in Figure 15, the weather forecast data acquired at Step S103 in Figure 15, the hold monitoring schedule data generated at Step S104 in Figure 15, and the ventilation schedule data generated or updated at Step S203. First estimation means 1106 generates estimated temperature data indicating the estimated temperature, saturation water vapor amount estimation data corresponding to the estimated temperature, and estimated humidity data indicating the estimated humidity (Step S204). Storage means 1101 stores the estimated temperature data generated at Step S204 in the hold temperature estimation table (Figure 8A), the saturation water vapor amount estimation data generated at Step S204 in the saturation water vapor amount estimation table (Figure 8B), and the estimated humidity data generated at Step S204 in the hold humidity estimation table (Figure 9).

Next, second estimation means 1107 estimates the quality of cargo L based on the saturation water vapor amount estimation data and the estimated humidity data generated at Step S204, in the same manner as at Step S106 in Figure 5, and generates cargo quality estimation data indicating the estimated values of cargo quality (Step S205). Storage means 1101 stores the data generated at Step S205 in the cargo quality estimation table (Figure 10).

Next, the second estimation means 1107 determines whether the condensation occurrence level of any of the legs is "2" or "3," that is, whether or not condensation occurs (Step S206).

If it is determined at Step S206 that condensation does not occur (Step S206; No), evaluation means 1110 calculates a monetary evaluation value for the case in which ship 9 navigates along the navigation route indicated by the navigation route data generated at Step S102 in Figure 15, in accordance with the navigation schedule indicated by the navigation schedule data generated at Step S103 in Figure 15, and the crew performs ventilation during the ventilation period indicated by the ventilation schedule data generated or updated at Step S203 (Step S207). Next, notification means 1111 notifies the user of the navigation route indicated by the navigation route data generated at Step S102 in Figure 15, the navigation schedule indicated by the navigation schedule data generated at Step S103 in Figure 15, the ventilation schedule indicated by the ventilation schedule data generated or updated at Step S203, and the monetary evaluation value calculated at Step S207, by instructing the display 102 to display this information (Step S208). Thereafter, management device 11 terminates the processing.

If it is determined at Step S206 that condensation occurs (Step S206; Yes), management device 11 repeats the processing from Step S201 onward. In the processing at Step S201 from the second time onward, ventilation schedule generation means 1108 searches for a ventilation period from the navigation period following the last ventilation period that has already been identified.

If no ventilation period is found at Step S202 (Step S202; No), management device 11 performs the processing from Step S207 onward. If no ventilation period is found in the initial execution at Step S202, Step S203 is not executed, and the ventilation schedule data is not generated. Accordingly, at Step S208, the information that notification means 1111 instructs display 102 to present does not include the ventilation schedule.

If no ventilation period is found at Step S202 (Step S202; No), it means that the deterioration in the quality of cargo L cannot be sufficiently suppressed by ventilation. Accordingly, in such a case, notification means 1111 displays, at Step S208, a warning message on display 102 indicating that there is a high possibility of quality deterioration of cargo L during navigation, in addition to the navigation route and other related information.

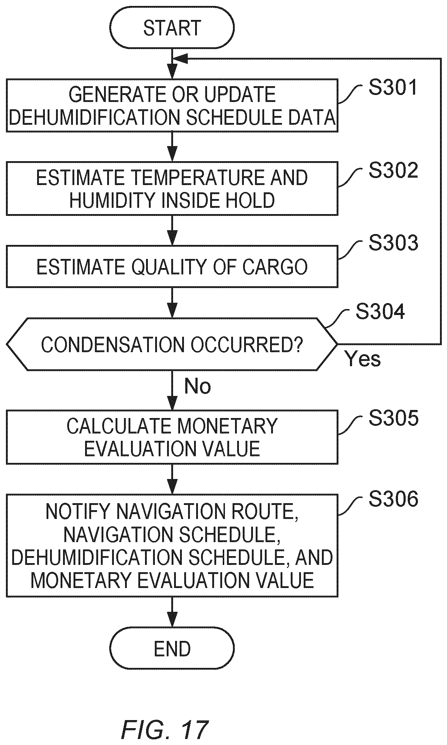

Figure 17 shows the flow of processing performed by management device 11 to propose a dehumidification-based navigation plan.

First, dehumidifier operation schedule generation means 1109 identifies the earliest period among the periods in which the condensation occurrence level is "2" or "3" (hereinafter referred to as the "condensation occurrence period"), based on the data of the cargo quality estimation table (Figure 10) generated at Step S106 in Figure 15. Dehumidifier operation schedule generation means 1109 then identifies a dehumidification period to prevent condensation during that condensation occurrence period and generates dehumidification schedule data (Figure 14) indicating the dehumidification period (Step S301). It is noted that the processing at Step S301 may be repeated depending on the result of the determination at Step S304, described later. If a new dehumidification period is identified in addition to the already identified dehumidification period, dehumidifier operation schedule generation means 1109 updates the existing dehumidification schedule data at Step S301 so that it includes both the already identified and the newly identified dehumidification periods.

Next, first estimation means 1106 estimates the temperature and humidity inside hold 91 based on the navigation schedule data generated at Step S103 in Figure 15, the weather forecast data obtained at Step S103 in Figure 15, the hold monitoring schedule data generated at Step S104 in Figure 15, and the dehumidification schedule data generated or updated at Step S301. First estimation means 1106 then generates estimated temperature data indicating the estimated temperature, saturation water vapor amount estimation data indicating the corresponding saturation water vapor amount, and estimated humidity data indicating the estimated humidity (Step S302). Storage means 1101 stores the estimated temperature data generated at Step S302 in the hold temperature estimation table (Figure 8A), the saturation water vapor amount estimation data generated at Step S302 in the saturation water vapor amount estimation table (Figure 8B), and the estimated humidity data generated at Step S302 in the hold humidity estimation table (Figure 9).

Next, second estimation means 1107 estimates the quality of cargo L based on the saturation water vapor amount estimation data and estimated humidity data generated at Step S302, in the same manner as at Step S106 in Figure 5, and generates cargo quality estimation data indicating the estimated values of cargo quality (Step S303). Storage means 1101 stores the data generated at Step S303 in the cargo quality estimation table (Figure 10).

Next, second estimation means 1107 determines whether the condensation occurrence level of any of the legs is "2" or "3," that is, whether or not condensation occurs (Step S304).

If it is determined at Step S304 that condensation does not occur (Step S304; No), evaluation means 1110 calculates a monetary evaluation value for the case in which ship 9 navigates along the navigation route indicated by the navigation route data generated at Step S102 in Figure 15, in accordance with the navigation schedule indicated by the navigation schedule data generated at Step S103 in Figure 15, and dehumidifier 14 performs dehumidification during the dehumidification period indicated by the dehumidification schedule data generated or updated at Step S301 (Step S305). Next, notification means 1111 notifies the user of the navigation route indicated by the navigation route data generated at Step S102 in Figure 15, the navigation schedule indicated by the navigation schedule data generated at Step S103 in Figure 15, the dehumidification schedule indicated by the dehumidification schedule data generated or updated at Step S301, and the monetary evaluation value calculated at Step S305, by instructing display 102 to present this information (Step S306). Thereafter, management device 11 terminates the processing.

If it is determined at Step S304 that condensation occurs (Step S304; Yes), management device 11 repeats the processing from Step S301 onward.

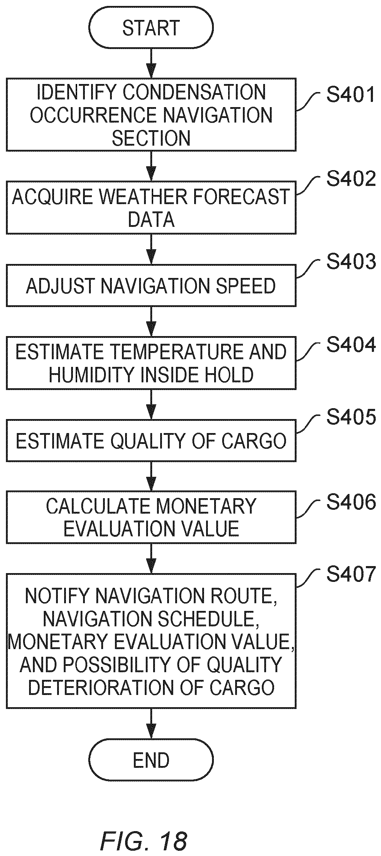

Figure 18 shows the flow of processing performed by management device 11 to propose a speed-adjusted navigation plan.

First, navigation schedule generation means 1104 identifies, based on the data of the cargo quality estimation table (Figure 10) generated at Step S106 in Figure 15, a navigation section within the navigation route indicated by the navigation route data generated at Step S102 in Figure 15 that includes a leg corresponding to a condensation occurrence period (hereafter referred to as the "condensation occurrence navigation section") (Step S401). In the present embodiment, the term "navigation section" refers to the section between two adjacent ports or passage points on the navigation route.

Next, navigation schedule generation means 1104 acquires, via acquisition means 1102, weather forecast data corresponding to various positions on the condensation occurrence navigation section identified at Step S401 and to various dates and times within the navigation period, assuming navigation of the condensation occurrence navigation section in accordance with the navigation schedule indicated by the navigation schedule data generated at Step S103 in Figure 15 (Step S402).

Next, navigation schedule generation means 1104 adjusts the navigation speed based on the weather forecast data acquired at Step S402, without changing the start and end times of the navigation period for the condensation occurrence navigation section. The adjustment is made such that the navigation speed becomes relatively higher in legs where the outside air temperature is lower, and relatively lower in legs where the outside air temperature is higher. Then, the navigation schedule data stored in storage means 1101 is updated to reflect the adjusted navigation speeds (Step S403).

Next, first estimation means 1106 estimates the temperature and humidity inside hold 91 based on the navigation schedule data updated at Step S403, the weather forecast data acquired at Step S402, and the hold monitoring schedule data generated at Step S104 in Figure 15. First estimation means 1106 then generates estimated temperature data indicating the estimated temperature, saturation water vapor amount estimation data indicating the saturation water vapor amount corresponding to the estimated temperature, and estimated humidity data indicating the estimated humidity (Step S404). Storage means 1101 stores the estimated temperature data generated at Step S404 in the hold temperature estimation table (Figure 8A), the saturation water vapor amount estimation data generated at Step S404 in the saturation water vapor amount estimation table (Figure 8B), and the estimated humidity data generated at Step S404 in the hold humidity estimation table (Figure 9).

Next, second estimation means 1107 estimates the quality of cargo L based on the saturation water vapor amount estimation data and estimated humidity data generated at Step S404, in the same manner as at Step S106 in Figure 5, and generates cargo quality estimation data indicating the estimated value of cargo quality (Step S405). The storage means 1101 stores the data generated at Step S405 in the cargo quality estimation table (Figure 10).

Next, evaluation means 1110 calculates a monetary evaluation value for the case in which ship 9 navigates along the navigation route indicated by the navigation route data generated at Step S102 in Figure 15, in accordance with the navigation schedule indicated by the navigation schedule data updated at Step S403 (Step S406).

Next, notification means 1111 notifies the user of the navigation route indicated by the navigation route data generated at Step S102 in Figure 15, the navigation schedule indicated by the navigation schedule data updated at Step S403, and the monetary evaluation value calculated at Step S406, by instructing display 102 to present this information (Step S407). If the condensation occurrence level of any of the legs is "2" or "3" (that is, if condensation occurs), the notification means 1111 causes display 102 to present a warning message at Step S407, indicating that there is a high possibility of deterioration in quality of cargo L during navigation, in addition to the navigation route and other related information. Thereafter, management device 11 terminates the processing.

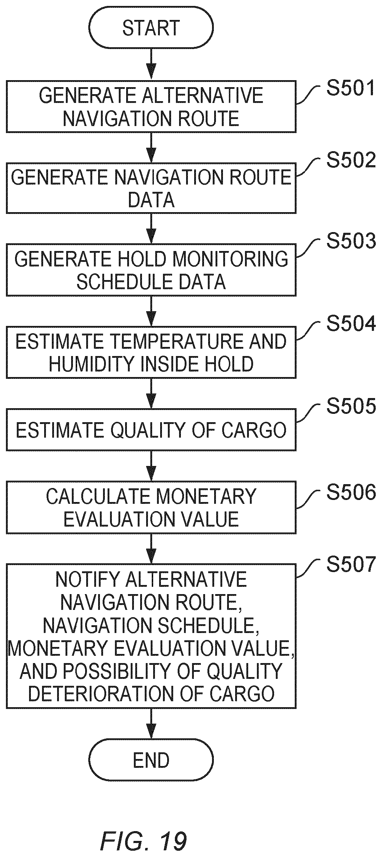

Figure 19 shows the flow of processing performed by management device 11 to propose an alternative route navigation plan.

First, navigation route generation means 1103 generates navigation route data indicating a navigation route that satisfies the constraint conditions indicated by the constraint condition data acquired at Step S101 in Figure 15 and has the second shortest navigation distance (hereinafter referred to as the "alternative navigation route") (Step S501).

Next, management device 11 performs processing similar to that performed at Steps S103 to S106 and S108 in Figure 15 with respect to the alternative navigation route indicated by the navigation route data generated at Step S501 (Steps S502 to S506).

Next, notification means 1111 notifies the user of the alternative navigation route indicated by the navigation route data generated at Step S501, the navigation schedule indicated by the navigation schedule data generated at Step S502, and the monetary evaluation value calculated at Step S506, by instructing display 102 to present this information (Step S507). If the condensation occurrence level of any of the legs is "2" or "3" (that is, if condensation occurs), notification means 1111 causes display 102 to present a warning message at Step S507, indicating that there is a high possibility of deterioration in quality of cargo L during navigation, in addition to the navigation route and other related information. Thereafter, management device 11 terminates the processing.

The foregoing is a description of the processing performed by management device 11 before the navigation of ship 9 begins. Based on the information displayed on display 102, the user determines the navigation plan (namely, the navigation route, the navigation schedule, the ventilation schedule, and the dehumidification schedule) to be adopted. The navigation plan adopted by the user is registered in management device 11.

Thereafter, navigation by ship 9 is initiated in accordance with the navigation plan adopted by the user. During the navigation of ship 9, management device 11 acquires measured temperature data transmitted from thermometers 12 and measured humidity data transmitted from hygrometers 13, for example, at predetermined time intervals. Management device 11 stores the measured temperature data and measured humidity data.

During the navigation of ship 9, management device 11 acquires weather forecast data related to the remaining voyage from weather information distribution server device 8, for example, at predetermined time intervals. Management device 11 updates the weather forecast table (Figure 6) based on the acquired weather forecast data.

During the navigation of ship 9, management device 11 performs the processing from Step S105 onward in Figure 15 for the remainder of the navigation, based on the latest measured temperature data, the latest measured humidity data, and the latest weather forecast data stored in the weather forecast table (Figure 6), for example, at predetermined time intervals. In the present embodiment, it is assumed that the navigation route will not be changed after ship 9 has started its navigation. Accordingly, in this case, the processing executed at Step S110 is limited to the processing for proposing a ventilation-based navigation plan (Figure 16), a dehumidification-based navigation plan (Figure 17), and a speed-adjusted navigation plan (Figure 18); the processing for proposing an alternative route navigation plan (Figure 19) is not executed.

When the processing at Step S105 onward in Figure 15 is performed for the remainder of the navigation, first estimation means 1106 uses the measured values obtained by thermometers 12 and hygrometers 13, instead of the forecast values received from weather information distribution server device 8, as the current temperature and humidity (i.e., the initial values of temperature and humidity) for estimating future temperature and humidity.

When the processing at Step S105 onward in Figure 15 is performed for the remainder of the navigation, the user is notified whether the navigation plan proposed by management device 11 is the same as the currently adopted navigation plan. For example, if it is desirable to continue navigation for the remainder of the navigation in accordance with the current navigation plan, notification means 1111 causes display 102 to show the current navigation plan in blue text. On the other hand, if there is an alternative navigation plan that is more desirable than the current navigation plan for the remainder of the navigation, notification means 1111 causes display 102 to show the current navigation plan in blue text and to show the alternative navigation plan in red text in such a manner that allows the user to easily compare them (e.g., simultaneously on the same screen), and also displays a button or similar element to accept user input for selecting the navigation plan to be adopted for the remainder of the navigation.

During the navigation of ship 9, the user determines, based on the information displayed on display 102, whether the navigation plan (namely, the navigation schedule, the ventilation schedule, and the dehumidification schedule) for the remainder of the navigation should be changed. If the user determines that the navigation plan should be changed and performs an operation to select a navigation plan to be adopted for the remainder of the navigation, the selected navigation plan is registered in management device 11. The navigation plan registered in this manner is thereafter displayed in blue text when displaying navigation plans for the remainder of the navigation.

### [Modifications]

The embodiment described above can be modified in various ways. Examples of such modifications are given below. It is noted that the above-described embodiment and the modifications described below may be combined, as appropriate.
(1) In the above-described embodiment, management device 11 is assumed to be a system comprised of a single device. However, the system may also be comprised of multiple devices that operate in coordination as management device 11.
(2) In the above-described embodiment, management device 11 is assumed to be installed on ship 9. However, management device 11 may be installed at a location other than on ship 9. Furthermore, if management device 11 is a system comprised of multiple devices, some of these devices may be installed on ship 9, and others may be installed at locations other than on ship 9.

For example, management device 11 may be comprised of an onboard terminal device used by the crew of ship 9, a land-based terminal device used by personnel of the ship operator (who are not crew members), and a server device installed either on ship 9 or at a location other than on ship 9. In this case, for example, before the start of navigation, the personnel of the ship operator may access the server device using the land-based terminal device, determine the navigation plan to be adopted based on the information presented by the server device, and the crew may access the server device using the onboard terminal device to confirm the contents of the navigation plan adopted by the personnel. Additionally, for example, during the navigation, the crew may access the server device using the onboard terminal device, determine the navigation plan to be adopted for the remainder of the navigation based on the information presented by the server device, and the personnel of the ship operator may access the server device using the land-based terminal device to confirm the contents of the navigation plan for the remainder of the navigation adopted by the crew.

(3) In the above-described embodiment, navigation of ship 9 according to the navigation plan proposed by management device 11 is assumed to be carried out by manual operation by the crew. However, if ship 9 is a ship capable of autonomous navigation, ship 9 may autonomously navigate in accordance with the navigation plan proposed by management device 11.

(4) In the above-described embodiment, cargo L is assumed to be steel coils; however, the type of cargo L is not limited thereto.

For example, if cargo L is wood, the moisture content of cargo L changes depending on the relative humidity inside hold 91. Specifically, if the relative humidity inside hold 91 is lower than the moisture content of cargo L, cargo L dries out, and the water vapor released from cargo L causes the absolute humidity of the air inside hold 91 to increase. On the other hand, if the relative humidity inside hold 91 is higher than the moisture content of cargo L, cargo L absorbs moisture from the air, causing the absolute humidity of the air inside hold 91 to decrease. Accordingly, in such a case, it is desirable for first estimation means 1106 to take into account the moisture content of cargo L when estimating temperature and humidity.

For example, in the case of wood, its monetary value tends to increase as its moisture content decreases. In such a case, it is desirable for second estimation means 1107 to estimate the future quality of cargo L by estimating the moisture content of cargo L based on the temperature and humidity inside hold 91.

(5) In the above-described embodiment, it is assumed that management device 11 notifies the user by displaying information on display 102. However, the method by which management device 11 notifies the user is not limited to visual display. For example, management device 11 may be equipped with a speaker and notify the user by emitting sound from the speaker.

(6) In the above-described embodiment, the types of parameters used by first estimation means 1106 to estimate the environmental parameters (temperature and humidity) inside hold 91 are not limited to those exemplified in the embodiment. For example, when tanks containing ballast water or the like are arranged outside the upper side walls or lower side walls, the temperature of the contents (such as ballast water) in those tanks may be used for estimation by first estimation means 1106. In addition, actual measured values of seawater temperature may also be used for estimation by first estimation means 1106. Furthermore, for example, the temperature of a side wall can vary greatly depending on whether or not it is in contact with seawater. A part of the side wall in contact with seawater changes according to the draft of ship 9. Therefore, the draft of ship 9 may also be used for estimation by first estimation means 1106.

(7) In the above-described embodiment, it is assumed that the monetary evaluation value includes the amount of decrease in cargo price due to the deterioration in cargo quality. However, alternatively, the amount of increase in cargo price due to the improvement in cargo quality may be subtracted. For example, if cargo L is wood, the monetary value of the wood generally tends to increase as it dries during transport. In this case, by presenting the user with a monetary evaluation value in which the increase in the monetary value of the wood is subtracted from costs such as fuel expenses, the user can easily determine which navigation plan offers a greater financial benefit.

(8) In the above-described embodiment, dehumidifier 14 is assumed to be the device used to forcibly change the values of the environmental parameters inside hold 91. However, the type of device used to forcibly change the environmental parameters inside hold 91 is not limited to a dehumidifier. For example, in addition to or instead of dehumidifier 14, ship 9 may be equipped with a heater that raises the temperature of the cross-deck, and the temperature inside hold 91 (in this case, the inner surface of the cross-deck and the air in contact with it) may be forcibly changed by operating the heater. Alternatively, in addition to or instead of dehumidifier 14, ship 9 may be equipped with an air-conditioning device other than a dehumidifier, such as a hot-air blower that heats the air inside hold 91, and the temperature inside hold 91 may be forcibly changed by operating such a device.

Furthermore, ship 9 may not be equipped with any appropriate device for forcibly changing the values of the environmental parameters inside hold 91.

(9) In the above-described embodiment, temperature and humidity are assumed to be the environmental parameters that affect the quality of cargo L. However, the types of environmental parameters are not limited to temperature and humidity. For example, if the quality of cargo L is affected by an oxygen concentration or carbon dioxide concentration inside hold 91, then the oxygen concentration and carbon dioxide concentration inside hold 91 may be used as environmental parameters. In such a case, system 1 would be equipped with an oxygen concentration meter or a carbon dioxide concentration meter instead of thermometers 12 and hygrometers 13.

(10) In the above-described embodiment, first estimation means 1106 is assumed to use a physical model to estimate internal environmental parameters based on forecast values of external environmental parameters. However, the method used by first estimation means 1106 to estimate internal environmental parameters based on forecast values of external environmental parameters is not limited thereto.

For example, instead of or in addition to the physical model, first estimation means 1106 may estimate the internal environmental parameters using a regression equation such as a multiple regression model, in which the external environmental parameters of hold 91 are used as explanatory variables and the internal environmental parameters of hold 91 are used as objective variables, or by using artificial intelligence such as a machine learning model. For instance, a configuration may be adopted in which first estimation means 1106 corrects the values of the internal environmental parameters of hold 91 estimated by the physical model using artificial intelligence such as a machine learning model.

(11) In the above-described embodiment, second estimation means 1107 is assumed to estimate the future quality of cargo L by identifying which of the three levels of condensation occurrence level applies, based on the number of condensation occurrence location types, namely hatch cover, cross-deck, upper side wall, side wall, and cargo (hereinafter referred to as "condensation occurrence location types"), for which condensation is estimated to occur. However, the method by which second estimation means 1107 estimates the future quality of cargo L based on the estimated values of the internal environmental parameters is not limited thereto.

For example, factors that may cause rust to form on steel coils include the amount of water droplets, the duration of time during which the water droplets are present, the temperature of the air in contact with cargo L or the surface of cargo L during that period, an amount and type of dust contained in the air inside hold 91, and the oxygen concentration in the air inside hold 91. Accordingly, second estimation means 1107 may estimate the future quality of cargo L using measured or estimated values of these factors.

Furthermore, for example, second estimation means 1107 may estimate the future quality of cargo L by using a regression equation such as a multiple regression model or artificial intelligence such as a machine learning model, in which the values of the internal environmental parameters of hold 91 (e.g., amount of water droplets, duration of water droplet presence, temperature, etc.) are used as explanatory variables, and the value representing the quality of cargo L (e.g., the value of the condensation occurrence level) is used as the objective variable.

(12) Management device 11 may include, as part of its functional configuration, an updating means, and the updating means may update the parameters used by first estimation means 1106 (e.g., parameters of a physical model or artificial intelligence) based on measured values of external environmental parameters (e.g., temperature measured by thermometers 12A and humidity measured by hygrometers 13A) and measured values of internal environmental parameters (e.g., temperature measured by thermometers 12B to 12G and humidity measured by hygrometers 13B to 13G). For example, when first estimation means 1106 uses a machine learning model, the updating means may update the machine learning model using training data in which the measured values of external environmental parameters are used as explanatory variables and the measured values of internal environmental parameters are used as objective variables.

Furthermore, the updating means may update the parameters used by second estimation means 1107 (e.g., parameters of a physical model or artificial intelligence) based on measured values of internal environmental parameters (e.g., temperature measured by thermometers 12B to 12G and humidity measured by hygrometers 13B to 13G) and measured cargo quality, which are measured values of the quality of cargo L.

In this case, acquisition means 1102 may, for example, acquire, as the measured cargo quality, a value indicating the quality of cargo L, which has been determined by visual inspection or the like by a crew member who has entered hold 91 in accordance with the hold monitoring schedule. Alternatively, acquisition means 1102 may identify the quality of cargo L based on images of cargo L captured by a camera installed inside hold 91, and acquire a value indicating the identified quality of cargo L as the measured cargo quality.

Then, for example, when second estimation means 1107 uses a machine learning model, the updating means may update the machine learning model using training data in which the measured values of hold internal environmental parameters (e.g., temperature measured by thermometers 12B to 12G and humidity measured by hygrometers 13B to 13G) are used as explanatory variables and the measured cargo quality are used as objective variables.

(13) In the above-described embodiment, management device 11 is assumed to generate an alternative navigation plan by performing only one of the following: adding a ventilation schedule, adding a dehumidification schedule, adjusting the water speed, or adopting an alternative navigation route. However, management device 11 may generate an alternative navigation plan based on a combination of two or more of these. For example, if there is a high possibility that the quality of cargo L may deteriorate with ventilation alone, a dehumidification schedule may be presented to the user in addition to the ventilation schedule.

(14) In the above-described embodiment, the management of the navigation schedule and the like is assumed to be performed on a per-leg basis, with each leg being a section obtained by dividing the navigation route at predetermined distances. However, the management of the navigation schedule and the like may be performed using units other than legs. For example, the management may be performed on a per-time-slot basis, with each time slot being a period obtained by dividing the navigation period into multiple intervals of predetermined duration.

(15) In the above-described embodiment, it is assumed that management device 11 acquires all forecast values of environmental parameters from weather information distribution server device 8. However, alternatively, management device 11 may acquire such forecast values by generating all or part of them. For example, management device 11 may store measured values of various environmental parameters for different past periods and regions, perform statistical processing on those measured values, and use the resulting statistical values as forecast values of the environmental parameters.

Furthermore, management device 11 may use forecast values of environmental parameters received from weather information distribution server device 8 for a predetermined near-future period from the present time (e.g., up to one week ahead), and use the above-mentioned statistical values for periods beyond that.

(16) In the above-described embodiment, the following constraints are assumed.

The user specifies the loading port departure date and time and the unloading port arrival date and time as fixed points, and management device 11 is not allowed to change the specified loading port departure date and time or unloading port arrival date and time.

The navigation route cannot be changed during the navigation.

The arrival and departure times at passage points cannot be changed during the navigation.

The timing of hold monitoring is automatically determined based on the specified time intervals and specified duration, and cannot be changed.

The above constraints are merely examples and may be modified in various ways. For example, the user may specify at least one of the loading port departure date and time and the unloading port arrival date and time as a time range (e.g., a period of about one week), and management device 11 may generate multiple navigation schedule data sets by varying at least one of the loading port departure date and time and the unloading port arrival date and time within the specified range. Then, a configuration may be adopted in which the management device 11 presents to the user, for example, the navigation schedule with the most favorable monetary evaluation value among the generated navigation schedules (e.g., the one with the smallest monetary evaluation value, if the monetary evaluation value represents cost).

In the above case, the duration of the voyage may vary depending on the navigation schedule. Therefore, when calculating the monetary evaluation value, it may be appropriate to take into account loss of availability of resources such as the ship 9 and the crew, which may arise from a longer voyage duration.

During navigation, the navigation route may be allowed to be modified, for example, within a predetermined distance range. In such a case, management device 11 can generate the navigation route for the remaining voyage more flexibly.

During navigation, at least one of the arrival date and time at a passage point and the departure date and time from the passage point may be allowed to be modified, for example, within a predetermined time range. In such a case, management device 11 can generate the navigation schedule for the remaining voyage more flexibly.

The timing of hold monitoring may be allowed to be modified, for example, within a predetermined time range. In such a case, management device 11 can generate the hold monitoring schedule more flexibly.

(17) In the above-described embodiment, the environmental parameters used by management device 11 to determine the ground speed in the case where the water speed is constant are assumed to be wind direction, wind speed, current direction, and current speed. However, the types of environmental parameters used by management device 11 to determine the ground speed from the water speed, or to determine the water speed from the ground speed, are not limited to these. For example, when generating a navigation schedule, management device 11 may also use wave direction and wave height, in addition to wind direction, wind speed, current direction, and current speed, to determine the ground speed when the water speed is constant.

(18) In the above-described embodiment, the values of various parameters corresponding to each leg are assumed to be the values at the departure point and departure date and time of that leg. However, this is not limiting. For example, as the values of various parameters corresponding to each leg, the values at the spatial midpoint (i.e., the location halfway between the departure and arrival points) and the time when ship 9 passes that midpoint may be used. Alternatively, the values at the temporal midpoint (i.e., the time halfway between the departure and arrival times) and the location of ship 9 at that time may also be used as the parameter values for each leg.

(19) Even if no deterioration in the quality of cargo L occurs during navigation, the quality of cargo L may deteriorate when the hatch cover is opened for unloading cargo L at the unloading port. For example, if the surface temperature of cargo L is low upon arrival of ship 9 at the unloading port, and the outside air at the unloading port has a high temperature and humidity, opening the hatch cover may allow the warm, humid air to flow into hold 91, potentially causing condensation on the surface of cargo L as it cools.

In the above-described embodiment, the navigation schedule generated by management device 11 is assumed to cover the period up to the arrival at the unloading port. In such a case, as mentioned above, deterioration in the quality of cargo L may occur when the hatch cover is opened at the unloading port. Therefore, management device 11 may be configured to generate a navigation schedule that also includes the period after arrival at the unloading port (for example, the period until unloading is completed), and to generate the navigation plan in such a way that the possibility of cargo L quality deterioration during the post-arrival period is also reduced.

In such a case, management device 11 may generate a navigation schedule in which the ship arrives at the unloading port at a time when the absolute humidity of the outside air is low. Alternatively, if the absolute humidity of the outside air is the same, management device 11 may generate a ventilation schedule such that ventilation is performed during a period when the outside air temperature is high. In this way, management device 11 can generate a navigation plan that reduces a likelihood of condensation occurring when the hatch cover is opened.

(20) In the above-described embodiment, hygrometers 13 are assumed to measure absolute humidity. Alternatively, hygrometers 13 may measure relative humidity. In a case where hygrometers 13 measure relative humidity, for example, management device 11 may calculate the absolute humidity of the air based on the air temperature measured by thermometers 12 and the relative humidity measured by hygrometers 13.

Furthermore, in the above-described embodiment, the humidity forecast data obtained by management device 11 from weather information distribution server device 8 is assumed to indicate absolute humidity. Alternatively, management device 11 may obtain humidity forecast data indicating relative humidity from weather information distribution server device 8. When the humidity forecast data indicates relative humidity, management device 11 may, for example, calculate the absolute humidity of the air based on the relative humidity indicated by the humidity forecast data and the air temperature indicated by the temperature forecast data for the same time and area obtained from weather information distribution server device 8.

(21) In the above-described embodiment, management device 11 formulates the navigation route, navigation schedule, hold ventilation schedule, and operation schedule of devices that forcibly change the environmental parameters in the hold in such a way as to prevent the occurrence of condensation. Alternatively, management device 11 may formulate the navigation route, navigation schedule, hold ventilation schedule, and operation schedule of devices that forcibly change the environmental parameters in the hold so as to maximize monetary value.

(22) In the above-described embodiment, the occurrence of condensation is determined based on whether the absolute humidity exceeds the saturation water vapor amount. Alternatively, the occurrence of condensation may be determined based on whether the temperature of components such as the hatch cover is below the dew point temperature. In that case, instead of using the saturation water vapor amount estimation data (see Figure 8B), the dew point temperatures corresponding to the humidity (absolute humidity) indicated by the estimated humidity data stored in the hold humidity estimation table (see Figure 9) are identified according to a known calculation formula or conversion table. The resulting dew point temperatures are then used as the dew point estimated temperature data.

(23) The present invention can be understood as a device or system exemplified by management device 11, or as a program that causes computer 10, which constitutes management device 11, to execute the processes performed by management device 11. Furthermore, the program according to the present invention may be provided as recorded on a recording medium, from which it may be read by a computer, or it may be downloaded to a computer via a communication network.

### DESCRIPTION OF REFERENCE NUMERALS

1: System
8: Weather information distribution server device
9: Ship
10: Computer
11: Management device
12: Thermometer
13: Hygrometer
14: Dehumidifier
91: Hold
101: Computer main body
102: Display
103: Input device
1011: Memory
1012: Processor
1013: Input/output interface
1014: Communication interface
1101: Storage means
1102: Acquisition means
1103: Navigation route generation means
1104: Navigation schedule generation means
1105: Hold monitoring schedule generation means
1106: First estimation means
1107: Second estimation means
1108: Ventilation schedule generation means
1109: Dehumidifier operation schedule generation means
1110: Evaluation means
1111: Notification means

## Claims

1. A system comprising:
an acquisition means that acquires forecast values of external environmental parameters, which are forecasts of future environmental parameters outside a hold of a ship;
a first estimation means that generates estimated values of internal environmental parameters, which are estimates of future environmental parameters inside the hold of the ship, based on the forecast values of the external environmental parameters; and
a second estimation means that generates estimated values of a cargo quality, which are estimates of a future quality of a cargo stored in the hold, based on the estimated values of the internal environmental parameters.

2. The system according to Claim 1,
wherein
the acquisition means acquires the forecast values of the external environmental parameters corresponding to each of a plurality of navigation schedules,
the first estimation means generates the estimated values for the internal environmental parameters corresponding to the each of the plurality of navigation schedules, and
the second estimation means generates the estimated values of the cargo quality corresponding to the each of the plurality of navigation schedules.

3. The system according to Claim 2, further comprising:
an evaluation means that, for the each of the plurality of navigation schedules, generates a monetary evaluation value based on the estimated values of the cargo quality corresponding to the each of the plurality of navigation schedules and a cost associated with navigation of the ship in accordance with the each of the plurality of navigation schedules.

4. The system according to Claim 1,
wherein
the acquisition means acquires the forecast values of the external environmental parameters corresponding to each of a plurality of navigation routes,
the first estimation means generates the estimated values of the internal environmental parameters corresponding to the each of the plurality of navigation routes, and
the second estimation means generates the estimated values of the cargo quality corresponding to the each of the plurality of navigation routes.

5. The system according to Claim 4, further comprising:
an evaluation means that for the each of the plurality of navigation routes, generates a monetary evaluation value based on the estimated values of the cargo quality corresponding to the each of the plurality of navigation routes and a cost associated with navigation of the ship in accordance with the each of the plurality of navigation routes.

6. The system according to Claim 1,
wherein the first estimation means generates the estimated values of the internal environmental parameters based on a ventilation schedule of the hold.

7. The system according to Claim 6, further comprising:
a generation means that generates the ventilation schedule based on the forecast values of the external environmental parameters and the estimated values of the internal environmental parameters.

8. The system according to Claim 1,
wherein the first estimation means generates the estimated values of the internal environmental parameters based on an operation schedule of a device that forcibly changes the values of the environmental parameters inside the hold of the ship.

9. The system according to Claim 8, further comprising:
a generation means that generates the operation schedule based on the forecast values of the external environmental parameters and the estimated values of the internal environmental parameters.

10. The system according to Claim 8 or 9, further comprising:
an evaluation means that generates a monetary evaluation value based on the estimated values of the cargo quality and a cost associated with operation of the device according to the operation schedule.

11. The system according to Claim 1,
wherein
the acquisition means acquires the measured values of the external environmental parameters, which are the measured values of the environmental parameters outside the hold of the ship, and
the first estimation means generates the estimated values of the internal environmental parameters based on the measured values of the external environmental parameters.

12. The system according to Claim 1,
wherein
the acquisition means acquires the measured values of the internal environmental parameters, which are the measured values of the environmental parameters inside the hold of the ship, and
the second estimation means generates the estimated values of the cargo quality based on the measured values of the internal environmental parameters.

13. The system according to Claim 1,
wherein
the acquisition means acquires the measured values of the external environmental parameters, which are the measured values of the environmental parameters outside the hold of the ship, and the measured values of the internal environmental parameters, which are the measured values of the environmental parameters inside the hold of the ship, and
the system further comprises an updating means that updates the parameters used by the first estimation means to generate the estimated values of the internal environmental parameters, based on the measured values of the external environmental parameters and the measured values of the internal environmental parameters.

14. The system according to Claim 1,
wherein
the acquisition means acquires the measured values of the internal environmental parameters, which are the measured values of the environmental parameters inside the hold of the ship, and the measured values of the cargo quality, which are the measured values of the quality of the cargo, and
the system further comprises an updating means that updates the parameters used by the second estimation means to generate the estimated values of the cargo quality, based on the measured values of the internal environmental parameters and the measured values of the cargo quality.

15. The system according to Claim 1, further comprising:
a notification means that notifies a user when the estimated values of the internal environmental parameters satisfy a predetermined condition.

16. The system according to Claim 1, further comprising:
a notification means that notifies a user when the estimated values of the cargo quality satisfy a predetermined condition.

17. A program for causing a computer to execute:
a process of acquiring forecast values of external environmental parameters, which are forecasts of future environmental parameters outside a hold of a ship;
a process of generating estimated values of internal environmental parameters, which are estimates of future environmental parameters inside the hold of the ship, based on the forecast values of the external environmental parameters; and
a process of generating estimated values of cargo quality, which are estimates of a future quality of a cargo stored in the hold of the ship, based on the estimated values of the internal environmental parameters.
